# EUROPEAN PATENT APPLICATION

(11) **EP 1 764 567 A2**
(43) Date of publication of application: **21.03.2007**
(21) Application number: 06019184.8
(22) Date of filing: 13.09.2006
(51) Int. Cl.: F25B 29/00, F25B 47/00, F25B 9/00

(54) **Cooling device**

(30) Priority: 14.09.2005 JP 2005267289
(71) Applicant: SANYO ELECTRIC CO., LTD., Moriguchi-shi, Osaka (JP)
(72) Inventor: Otake, Masahisa, Gunma 370-0615 (JP); Sato, Koji, Gunma 370-0523 (JP); Mukaiyama, Hiroshi, Gunma 370-0725 (JP)
(74) Representative: Glawe, Delfs, Moll

(57) **Abstract**

There is disclosed a highly efficient cooling device which can reduce energy consumption, and the cooling device comprises: a refrigeration cycle circuit (10) including a compressor (2), a radiator (3A), an expansion valve (4) and an evaporator (5); a cooling container (20) in which a cooling object is stored; and a hot water storage tank (31) which stores hot water. Moreover, the cooling object in the cooling container is cooled by absorption of heat in the evaporator, water is boiled by release of the heat in the radiator to store the hot water in the hot water storage tank, and the hot water in the hot water storage tank can be supplied into the cooling container.

## Description

### BACKGROUND OF THE INVENTION

The present invention relates to a cooling device including cooling means for cooling a cooling object stored in a cooling container, and taking out this cooling object to thereafter clean or sterilize the cooling container or the like.

In general, as a method of cooling a cooling object such as food to store the object, there is broadly utilized a cooling device using a vapor compression type refrigeration cycle. In this type of cooling device, the cooling object is cooled by an evaporation function of a refrigerant in an evaporator, and heat is released to the atmosphere or the like owing to condensation of the refrigerant in a condenser. In Japanese Patent No. 2860352, there is disclosed a method in which milk immediately after drawn is introduced into a milk tank to cool the milk by a freezer.

Moreover, in a device which handles the food and the like, for a hygienic reason, it is important to clean and sterilize the device. Even in the above cooling device, after the cooling object is taken out, it is necessary to clean and sterilize a container or the like in which this cooling object has been stored. In Japanese Patent No. 2532046, there is disclosed a cleaning unit which automatically cleans a bulk cooler for cooling and storing milk or a milking pipeline. This cleaning unit supplies a plurality of types of detergents and the like together with water or hot water to a device required to be cleaned in accordance with a predetermined process.

However, in the above cooling device, there has been a problem that since hot water necessary for the cleaning is supplied from a boiler, an electric water heater or the like, energy consumption for the supply of the hot water is large. Furthermore, since heat generated by the condensation of the refrigerant is released to the atmosphere from the condenser having the refrigeration cycle, effective utilization of the energy is not realized. There is also a problem that a rise in ambient temperature is brought about.

### SUMMARY OF THE INVENTION

The present invention has been developed to solve the problem of such a conventional technology, and an object thereof is to provide a highly efficient cooling device which is capable of reducing energy consumption.

In a first aspect of the present invention, a cooling device comprises: a refrigeration cycle circuit including a compressor, a radiator, throttle means and an evaporator; a cooling container in which a cooling object is stored; and a hot water storage tank which stores hot water, wherein the cooling object in the cooling container is cooled by absorption of heat in the evaporator, water is boiled by release of the heat in the radiator to store the hot water in the hot water storage tank, and the hot water in the hot water storage tank is supplied into the cooling container.

Moreover, in a second aspect of the present invention, a cooling device comprises: a refrigeration cycle circuit including a compressor, a radiator, throttle means and an evaporator; a cooling container in which a cooling object is stored; a hot water storage tank which stores hot water; and a cleaning unit which supplies a cleaning liquid to the cooling container, wherein the cooling object in the cooling container is cooled by absorption of heat in the evaporator, water is boiled by release of the heat in the radiator to store the hot water in the hot water storage tank, and the hot water in the hot water storage tank is supplied to the cleaning unit.

Furthermore, the hot water storage tank includes: a high-temperature takeout port out of which the hot water is taken from an upper portion of the hot water storage tank; and a medium-temperature takeout port which is disposed below this high-temperature takeout port and out of which the hot water is taken, mixing of the hot water taken out of the high-temperature takeout port and the hot water taken out of the medium-temperature takeout port and mixing of the hot water taken out of the medium-temperature takeout port and water are selectively performed, and this mixed hot water is supplied to the cleaning unit.

In addition, in a cooling run to cool the cooling object, a temperature of the hot water to be generated can be changed with the progress of the cooling run.

Moreover, in a case where the cooling object is introduced into the cooling container, and the cooling run is performed until this cooling object reaches a predetermined temperature, a medium-temperature outlet hot water cooling run may be performed to generate the hot water at a first set temperature for a predetermined time after start of the cooling run, and a high-temperature outlet hot water cooling run may be performed to generate the hot water at a second set temperature which is higher than the first set temperature until the cooling run ends after an elapse of the predetermined time.

Furthermore, in a case where the cooling object is introduced into the cooling container a plurality of times, and the cooling run is performed a plurality of times, during the whole cooling run from start of the first cooling run until end of the last cooling run, a medium-temperature outlet hot water cooling run may be performed to generate the hot water at a first set temperature for a predetermined time after the start of the first cooling run, and a high-temperature outlet hot water cooling run may be performed to generate the hot water at a second set temperature which is higher than the first set temperature until the last cooling run ends after an elapse of the predetermined time.

In addition, the cooling container includes temperature detecting means for detecting the temperature of the cooling object, a required time of the high-temperature water cooling run is calculated based on a change of the temperature detected by the temperature detecting means with time, and the medium-temperature outlet hot water cooling run may be switched to the high-temperature outlet hot water cooling run.

Moreover, the refrigeration cycle circuit may include a second evaporator which absorbs the heat from a separate heat source which is different from the cooling object.

Furthermore, there may be disposed means for separating a surplus refrigerant of the refrigeration cycle from this refrigeration cycle with a drop in the temperature of the cooling object to temporarily accumulate the refrigerant in a cooling run of the cooling device.

Moreover, the cooling device may further comprise a second refrigeration cycle circuit in addition to the refrigeration cycle circuit, and the second refrigeration cycle circuit may be constituted so that an evaporator of the second refrigeration cycle circuit absorbs heat from a heat source separate from the cooling object, water is heated to generate hot water by release of the heat from a radiator of the second refrigeration cycle circuit, and this hot water can be supplied to the hot water storage tank.

Furthermore, the cooling device may include: a high-temperature return pipe which returns the hot water heated by the radiator to the hot water storage tank; and a discharge port disposed in the high-temperature return pipe via a discharge valve, the discharge valve may be opened for a predetermined time after the start of the cooling run to discharge the hot water out of a system.

In addition, the cooling device may include: a high-temperature return pipe which returns the hot water heated by the radiator to the hot water storage tank; and a medium-temperature return pipe branched from this high-temperature return pipe and connected to a portion of the hot water storage tank below a connected portion of the high-temperature return pipe via a changeover valve. The changeover valve may be operated for a predetermined time after the start of the cooling run to return the hot water to the hot water storage tank via the medium-temperature return pipe.

Moreover, the cooling device may include: a high-temperature return pipe which returns the hot water heated by the radiator to the hot water storage tank; a low-temperature pipe which allows low-temperature water to flow from the hot water storage tank through the radiator; and a return pipe branched from the high-temperature return pipe and connected to the low-temperature pipe via a changeover valve. The changeover valve may be operated for a predetermined time after the start of the cooling run to return the hot water to the low-temperature pipe.

Furthermore, the cooling container may include temperature detecting means for detecting the temperature of the cooling object, and the rotational speed of the compressor may be controlled based on a change of the temperature detected by the temperature detecting means with time.

In addition, milk can be cooled as the cooling object.

Moreover, the cooling run may be performed even during a cleaning run to introduce water, a cleaning liquid or a sterilizing liquid into the cooling container instead of the cooling object to generate hot water.

Furthermore, carbon dioxide may be used as a refrigerant of the refrigeration cycle circuit and the second refrigeration cycle circuit.

In addition, a pressure of the refrigerant in the radiators of the refrigeration cycle circuit and the second refrigeration cycle circuit may be not less than a critical pressure of the refrigerant during the run of these circuits.

According to the present invention, in the device which introduces the cooling object into the cooling container to cool the object and which stores the cooling object to be cold for a certain time and which cleans and sterilizes the cooling container and associated units after taking out the cooling object, there is effectively utilized the heat on a high-temperature side of the refrigeration cycle circuit generated in a cooling process to boil the water. The heat has heretofore been released to the atmosphere without being utilized. This hot water can be used in cleaning the cooling container or the like.

Furthermore, in a case where the hot water is generated simultaneously with the cooling, and this hot water is used for the cleaning or the like, a preferred highly efficient run is possible. In consequence, energy consumption efficiency of the whole cooling device can be enhanced, and energy consumption can be reduced.

### BRIEF DESCRIPTION OF THE DRAWINGS

FIG. 1 is a schematic constitution diagram of a cooling device in a first example of the present invention;
FIG. 2 is a sectional view showing a schematic structure of a cooling container of the cooling device in the first example of the present invention;
FIG. 3 is a sectional view showing a schematic structure of the cooling container and an evaporator of the cooling device in the first example of the present invention;
FIG. 4 is an explanatory view showing a schematic shape of the evaporator of the cooling device in the first example of the present invention;
FIG. 5 is a pressure-enthalpy graph showing a refrigeration cycle of the present invention;
FIG. 6 is an explanatory view showing a cleaning step in the first example of the present invention;
FIG. 7 is an explanatory view showing outlet hot water temperature control in the first example of the present invention;
FIG. 8 is an explanatory view showing the outlet hot water temperature control in the first example of the present invention;
FIG. 9 is an explanatory view showing a schematic shape of an evaporator of a cooling device in a second example of the present invention;
FIG. 10 is an explanatory view showing a schematic shape of an evaporator of a cooling device in third and fourth examples of the present invention;
FIG. 11 is a sectional view showing a schematic shape of the evaporator of the cooling device in the third example of the present invention;
FIG. 12 is a sectional view showing a schematic shape of the evaporator of the cooling device in the fourth example of the present invention;
FIG. 13 is a schematic constitution diagram showing a cooling device in a fifth example of the present invention;
FIG. 14 is a schematic constitution diagram showing a cooling device in a sixth example of the present invention;
FIG. 15 is an explanatory view showing refrigerant amount control in the sixth example of the present invention;
FIG. 16 is a schematic constitution diagram showing a cooling device in a seventh example of the present invention;
FIG. 17 is an explanatory view showing a control operation in the seventh example of the present invention;
FIG. 18 is a schematic constitution diagram showing a cooling device in eighth and ninth examples of the present invention; and
FIG. 19 is a schematic constitution diagram showing a cooling device in a tenth example of the present invention.

### DETAILED DESCRIPTION OF THE PREFERRED EMBODIMENTS

Preferred embodiments of a cooling device of the present invention will be described hereinafter in detail with reference to the drawings.

### (Example 1)

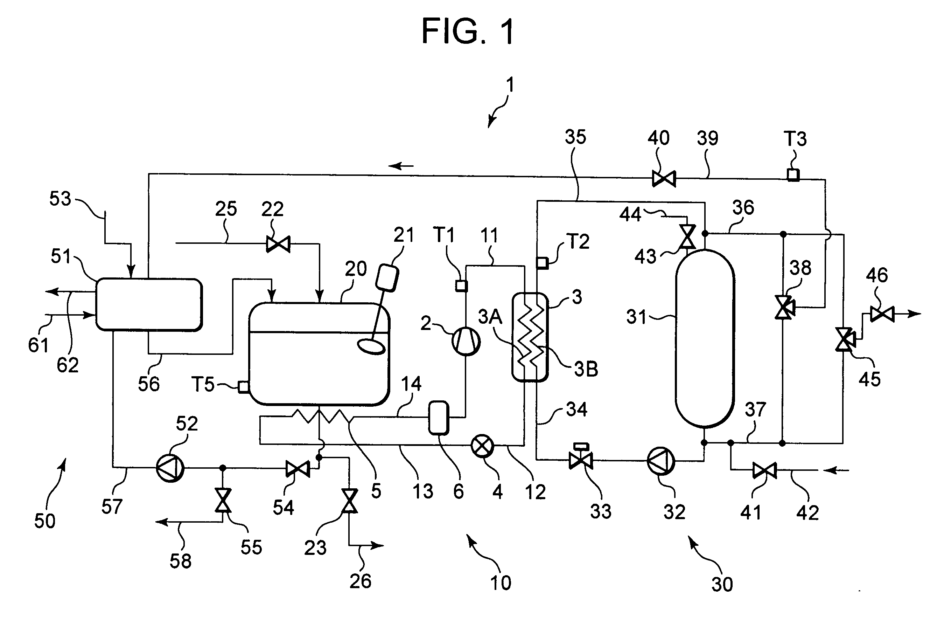

FIG. 1 is a circuit diagram of a cooling device 1 in a first example of the present invention. The cooling device 1 of the present example includes a refrigeration cycle circuit 10, a hot water supply circuit 30, a cooling container 20 and an automatic cleaning circuit 50.

The refrigeration cycle circuit 10 is constituted so that a compressor 2, a discharge pipe 11, a radiator 3A, a high-pressure refrigerant pipe 12, an expansion valve 4 as throttle means, a low-pressure refrigerant pipe 13, an evaporator 5 and a suction tube 14 are successively connected to one another to form a closed circuit. Here, the radiator 3A is included in a water heat exchanger 3, the water heat exchanger 3 includes a refrigerant channel 3A (radiator 3A) on a refrigeration cycle circuit 10 side and a water channel 3B on a hot water supply circuit 30 side, and the refrigerant channel 3A is heat-exchangeably connected to the water channel 3B so that a refrigerant counters a water stream.

To the discharge pipe 11, a discharge temperature sensor T1 is attached which detects a temperature of the refrigerant compressed and discharged by the compressor 2. The suction tube 14 which connects a suction portion of the evaporator 5 to that of the compressor 2 is provided with an accumulator 6 for protecting the compressor 2 from breakage or the like due to suction of a liquid refrigerant. Furthermore, during a low-temperature-insulating run described later, for a purpose of preventing the refrigerant from being returned from a high-pressure side to the evaporator 5, a check valve (not shown) is disposed between the evaporator 5 and the accumulator 6.

Here, carbon dioxide is introduced as the refrigerant in the refrigeration cycle circuit 10. Since the refrigerant pressure on a high-pressure side of a refrigeration cycle in the refrigerant channel 3A or the like exceeds a critical pressure, the refrigeration cycle is a transitional critical cycle. As a lubricant of the compressor 2, there is usable, for example, mineral oil, alkyl benzene oil, ether oil, ester oil, polyalkylene glycol (PAG), polyol ether (POE) or the like.

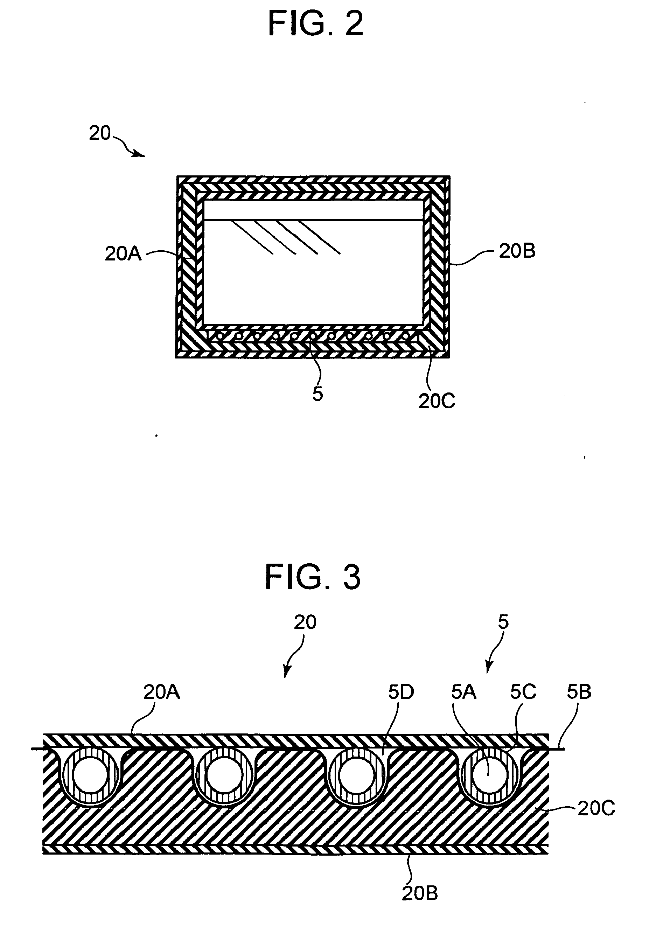

As shown in FIG. 2, the cooling container 20 is constituted of an inner container 20A in which a cooling object (milk in the present example) is stored, an outer covering 20B, the evaporator 5 of the refrigeration cycle circuit, and an insulating material 20C. Here, as a material of the inner container 20A and the outer covering 20B, in consideration of a resistance to corrosion or the like, for example, stainless steel or the like is used. The insulating material 20C is a foamed insulating material such as urethane, and injected into a space between the inner container 20A and the outer covering 20B, after the evaporator 5 is bonded to the inner container 20A to further assemble the outer covering 20B.

FIG. 3 shows a bonded portion between the cooling container 20 and the evaporator 5 in more detail. In the evaporator 5, a heat transfer tube 5C is used which is formed by bending a copper tube or the like, and this heat transfer tube 5C is heat-exchangeably bonded to the outside of the inner container 20A. Here, the refrigerant flows through an inside 5A of the heat transfer tube 5C, and evaporates there. Moreover, the milk stored in the inner container 20A is cooled and insulated by evaporation of the refrigerant. Thus, use of a round tube as the heat transfer tube of the evaporator 5 is advantageous in respect of pressure resistance in a case where a carbon dioxide refrigerant is used in which a refrigerant pressure during the run is higher than that of an HFC-based refrigerant.

In a case where the round tube is used, a contact area between an outer peripheral surface of the round tube and the inner container 20A is small. Therefore, a contact heat resistance is large, and this raises a problem in respect of a performance. Therefore, to promote heat transmission from the refrigerant to the cooling object, heat transfer putty or the like is used in a void 5D in the vicinity of the bonded portion between the inner container 20A and the heat transfer tube 5C. Furthermore, the heat transfer tube 5C is covered with a heat transfer promoting sheet 5B such as an aluminum sheet so that the heat transfer tube comes into contact with an outer surface of the inner container 20A. It is to be noted that instead of the heat transfer promoting sheet 5B, there may be used a copper plate bent into a shape similar to that of the heat transfer promoting sheet 5B. In this case, the heat transfer putty or the like may be used in the void 5D between the copper plate and the heat transfer tube so that the copper plate comes into contact with the outer surface of the inner container 20A.

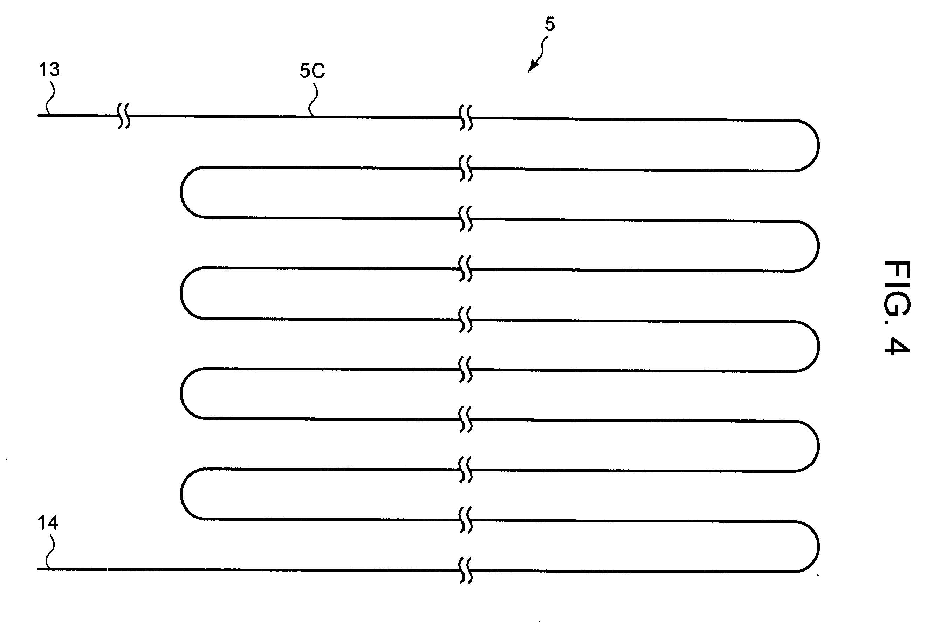

The heat transfer tube 5C is bent in a meandering manner in accordance with a shape of the inner container 20A as shown in, for example, FIG. 4. In this case, if necessary, a plurality of bent heat transfer tubes 5C are combined and connected in parallel, so that a plurality of refrigerant flow paths can be arranged. To further promote the heat transfer, grooves may be disposed in the heat transfer tube 5C.

It is to be noted that although not shown in FIG. 2 for the sake of simplification of drawing, the cooling container 20 includes an introducing port for introducing the milk as the cooling object and a takeout port for taking out the milk. Moreover, as shown in the circuit diagram of FIG. 1, the milk introducing port is connected to an introducing pipe 25 via an introducing port valve 22. Furthermore, the milk takeout port is connected to a takeout pipe 26 for taking out the milk via a takeout valve 23.

Moreover, a milk temperature sensor T5 for detecting a temperature of the milk as the cooling object is attached to the outer peripheral surface of the inner container 20A of the cooling container 20. Furthermore, the cooling container 20 includes a stirrer 21 which promotes the heat transfer during the cooling and which reduces temperature unevenness to exactly measure the temperature. It is to be noted that the stirrer 21 is constituted of a stirring blade, a stirring motor and a shaft which connects the blade to the motor.

The hot water supply circuit 30 is constituted of: a hot water storage tank 31 having an outer peripheral surface thereof covered with an insulating material to store hot water therein; a hot water storage circuit which receives heat from the radiator 3A of the refrigeration cycle circuit 10 to thereby boil water and store the hot water in the hot water storage tank 31; and a supply circuit which supplies the hot water to a hot water supply load equipment for a cleaning application or the like. When instead of low-temperature water, the high-temperature hot water flows from a lower portion of the hot water storage tank 31 into the water channel 3B of the water heat exchanger 3 during the cooling run, a cooling capability of the refrigeration cycle and a COP remarkably drop. Therefore, to constantly supply the low-temperature water from the lower portion of the hot water storage tank 31 to the water channel 3B of the water heat exchanger 3, it is preferably to select a capacity of the hot water storage tank 31 which is 1.2 or more times the predicted maximum amount of the milk as the cooling object to be introduced into the cooling container 20. That is, in a case where the amount of the milk as the cooling object to be introduced into the cooling container 20 is 500 liters, the capacity of the hot water storage tank 31 is set to 600 liters or more.

The hot water storage circuit is constituted by connecting the lower portion of the hot water storage tank 31 which stores the hot water to an inlet of the water channel 3B of the water heat exchanger 3 by a low-temperature pipe 34, connecting an outlet of the water channel 3B to an upper portion of the hot water storage tank 31 by a high-temperature pipe 35, and disposing a circulating water pump 32 and a flow rate adjustment valve 33 on the low-temperature pipe 34. It is to be noted that as described above, a water flow direction in the water channel 3B of the water heat exchanger 3 is opposed to a refrigerant flow in the radiator 3A. To the high-temperature pipe 35, there is attached an outlet hot water temperature sensor T2 for measuring a temperature of the hot water which exchanges heat in the water heat exchanger 3 to become hot.

Next, a constitution of the supply circuit will be described. The upper portion of the hot water storage tank 31 is connected to a high-temperature takeout pipe 36 which takes out high-temperature hot water, the lower portion of the hot water storage tank 31 is connected to a low-temperature takeout pipe 37 which takes out low-temperature water, and the high-temperature takeout pipe 36 and the low-temperature takeout pipe 37 are connected to a cleaning mixture valve 38. This cleaning mixture valve 38 is disposed which mixes the high-temperature hot water and the low-temperature water stored in the hot water storage tank 31 to thereby adjust the temperature of the hot water to be supplied to a utilization side at a predetermined temperature. The hot water adjusted at the predetermined temperature by the cleaning mixture valve 38 is supplied to an automatic cleaner 51 through a hot water supply pipe 39. It is to be noted that the temperature of the hot water to be supplied is detected by a temperature sensor T3 attached to the hot water supply pipe 39.

Moreover, the hot water supply pipe 39 may be provided with a flow rate sensor (not shown), a flow switch (not shown) or the like as needed. Furthermore, the high-temperature takeout pipe 36 and the low-temperature takeout pipe 37 are provided with a check valve (not shown) which prevents a back flow to the hot water storage tank 31.

A mixture valve 45 supplies the hot water to the utilization side for an application other than the cleaning. The valve is connected to the upper portion of the hot water storage tank 31 via the high-temperature takeout pipe 36, connected to the lower portion of the hot water storage tank 31 via the low-temperature takeout pipe 37 and further connected to a load equipment for an application other than the cleaning application via a hot water supply valve 46. To the high-temperature takeout pipe 36 and the low-temperature takeout pipe 37 connected to the mixture valve 45, a check valve (not shown) for preventing the back flow to the hot water storage tank 31 is attached as described above, if necessary.

Moreover, a pipe which connects the mixture valve 45 to the hot water supply valve 46 is provided with a temperature sensor (not shown) or a flow rate sensor (not shown) for use in hot water supply control, a flow switch (not shown) and the like. It is to be noted that the hot water supply valve 46 is sometimes a valve included in the load equipment, a faucet for hot water supply or the like, and a plurality of hot water supply valves may be arranged.

Furthermore, the lower portion of the hot water storage tank 31 is connected to a water supply pipe 42 via a water supply valve 41. Accordingly, in a case where the hot water is used, city water is supplied into the hot water supply circuit 30 to compensate for a water amount corresponding to the amount of the used hot water. It is to be noted that the water supply pipe 42 includes a pressure reducing valve (not shown).

It is to be noted that when the high-temperature hot water in the hot water storage tank 31 is to be forcibly discharged, a discharge valve 43 is disposed. When the discharge valve 43 is opened, the high-temperature hot water can be discharged to the outside of the hot water supply circuit 30 via a hot water discharge port 44.

The automatic cleaning circuit 50 includes: a circulating cleaning circuit constituted by successively connecting the automatic cleaner 51, a cleaning pipe 56, the cooling container 20, a cleaning circulation pump 52 and a cleaning return pipe 57; a discharge port 58 connected to the cleaning return pipe 57 via a discharge valve 55; and at least one detergent supply port 53 for supplying a plurality of detergents or sterilizing agents. The hot water supply pipe 39 for supplying the hot water or cold water for the cleaning from the hot water supply circuit 30 to the hot water storage tank 31 is connected to the cleaning mixture valve 38 and the automatic cleaner 51 via a hot water supply valve 40 for cleaning.

Furthermore, the automatic cleaner 51 is connected to a second cleaning forward pipe 62 and a second cleaning return pipe 61 which constitute a second cleaning circuit for cleaning an associated unit other than the cooling container 20, such as a milking machine (not shown) or a milking pipeline (not shown, with the proviso that a part of the line is connected to the introducing pipe 25). The second cleaning circuit is provided with a cleaning circulation pump or means (not shown) which replaces this pump, a changeover valve (not shown), a discharge valve (not shown) and the like, if necessary. Furthermore, the automatic cleaner 51 includes one or a plurality of pump means (not shown) for transporting, into the cleaning circuit, a plurality of detergents or sterilizing agents supplied from the detergent supply port 53, at least one changeover control valve (not shown) and the like.

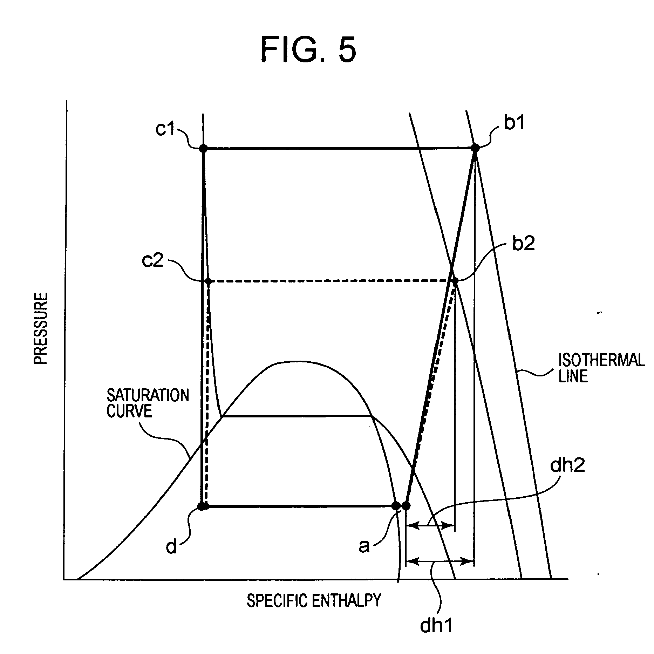

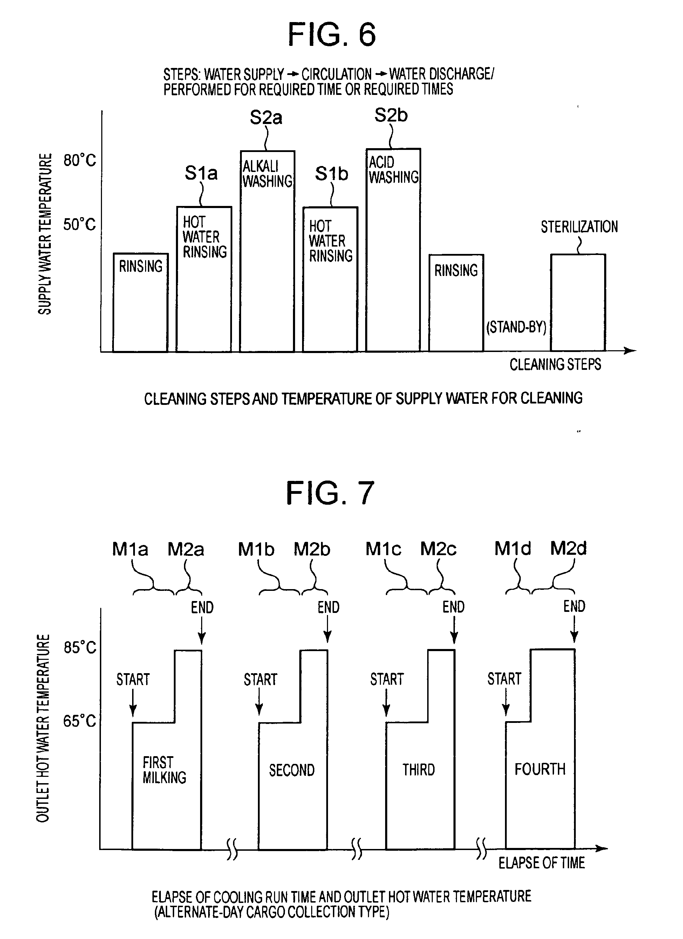

Next, there will be described an operation of the cooling device 1 in the present example with reference to FIG. 1, and, if necessary, FIGS. 5 and 6.

First, the cooling run will be described. The milking pipeline (not shown) leading to the milking machine (not shown) is connected to the milk introducing pipe 25, the introducing port valve 22 is opened, and the milk immediately after drawn is introduced into the cooling container 20. At this time, the milk takeout valve 23 and a divider valve 54 of the automatic cleaning circuit 50 are closed. The temperature of the milk immediately after drawn is approximately equal to or slightly lower than a body temperature of a cow, and specifically about 35°C to 38°C. In this case, bacteria are prevented from being generated. For a purpose of maintaining quality of the milk, the refrigeration cycle circuit 10 is operated to cool the milk and store it at the low temperature.

After starting the milking (after starting the introduction of the milk), the run of the refrigeration cycle circuit 10 is started, and the stirrer 21 is simultaneously driven. Usually, after a predetermined amount of the milk is pooled in the cooling container 20, the cooling run is started. However, when care is taken to avoid freezing, and the stirrer 21 is prevented from being idled, it is possible to start the cooling run simultaneously with the start of the introduction of the milk or before the introduction of the milk.

When the cooling run is started, the refrigerant is compressed under a high pressure at a high temperature by the compressor 2 of the refrigeration cycle circuit 10, and discharged to the discharge pipe 11. This state will be described with reference to a pressure-enthalpy graph of FIG. 5. The compressor 2 has a state a before suction. After the refrigerant is compressed and discharged, a state b1 is achieved. Here, the state b1 is supercritical. Thereafter, the refrigerant reaches the radiator 3A of the water heat exchanger 3, where heat is released to the water in the water channel 3B to obtain a low temperature. In FIG. 5, the state b1 turns to a state c1, and the state c1 is usually a liquid phase at a pressure which is not less than a critical pressure. The water in the water channel 3B is heated by a heat release function of the refrigerant in this radiator 3A to produce the hot water at a high temperature.

It is to be noted that in the refrigeration cycle circuit 10, carbon dioxide is used as the refrigerant, and the refrigerant pressure in the radiator 3A is not less than the critical pressure (state b1 to c1 in FIG. 5). Therefore, condensation of the refrigerant does not occur in the radiator 3A, and the temperature of the refrigerant drops with the release of the heat to the water in the water channel 3B from the inlet toward the outlet of the radiator 3A. On the other hand, in the water channel 3B of the water heat exchanger 3, the water temperature rises with absorption of the heat from the refrigerant from the inlet toward the outlet. Therefore, the refrigerant is highly efficient and heat-exchangeable as compared with an HFC-based refrigerant which is condensed to release the heat at a constant temperature. Moreover, it is possible to generate the high-temperature hot water suitable for the cleaning application.

Moreover, the low-temperature high-pressure refrigerant which has exited from the radiator 3A of the water heat exchanger 3 passes through the high-pressure refrigerant pipe 12, is throttled by the expansion valve 4, is expanded at a low pressure, and flows through the low-pressure refrigerant pipe 13 to reach the evaporator 5. In FIG. 5, this is represented by a change of the state c1 to a state d. The state d is a mixed two-phase state in which a liquid refrigerant is mixed with a vapor refrigerant. In the evaporator 5, the liquid-phase refrigerant evaporates to form vapor refrigerant (change from the state d to the state a in FIG. 5). The milk in the cooling container 20 is cooled by the evaporation function of this refrigerant.

Thereafter, the refrigerant flows from the evaporator 5 through the suction tube 14, and is sucked by the compressor 2 again. According to the function of the above continuous refrigeration cycle, the milk as the cooling object is cooled, and the hot water is simultaneously produced.

When the milking is completed, the introduction of the milk into the cooling container 20 ends, but thereafter the cooling run is continued until the milk reaches the predetermined temperature. Here, the temperature of the milk is detected by the milk temperature sensor T5 attached to the outer peripheral surface of the inner container 20A. The predetermined temperature at which the cooling run ends is set from a viewpoint of inhibiting generation of bacteria in the milk and maintaining the quality, and the temperature is specifically about 4°C.

During the cooling run, an open degree of the expansion valve 4 is adjusted so that the temperature of the discharged refrigerant detected by the discharge temperature sensor T1 attached to the discharge pipe 11 of the refrigeration cycle circuit 10 indicates a predetermined value. Specifically, when the refrigerant temperature detected by the discharge temperature sensor T1 is higher than the predetermined value, the open degree of the expansion valve 4 is enlarged. Conversely, when the refrigerant temperature detected by the discharge temperature sensor T1 is lower than the predetermined value, the open degree of the expansion valve 4 is reduced. In consequence, a highly efficient run can be performed on preferable conditions of a run to generate the high-temperature hot water suitable for the cleaning application.

Here, the rotational speed of the compressor 2 during the cooling run may be constant, but a frequency may be adjusted by an inverter or the like. In this case, a required cooling ability is calculated from a change, with time, of the milk temperature detected by the milk temperature sensor T5 attached to the outer peripheral surface of the inner container 20A, and the compressor 2 is set to a run frequency in accordance with the calculation result. In consequence, a cooling efficiency can be enhanced.

This respect will be described in more detail. As described above, from the viewpoint of the maintaining of the milk quality, the predetermined temperature to cool the milk is determined in the cooling container 20, but for a similar reason, a required time for cooling the milk at the predetermined temperature is also determined. Since a farming scale differs with a farm where a milk cooling machine is used, a freezing machine is selected in accordance with each farming scale so that the cooling at the predetermined temperature is completed within a predetermined time. Even in the same farm, a milked amount fluctuates with the day. Therefore, priority is usually given to management of the milk quality to use the freezing machine having a sufficiently large cooling capability. Therefore, when a device is selected on the basis of the maximum cooling capacity in this manner, in an actual cooling run, the capacity of the freezing machine becomes excessively large, and it cannot necessarily be said that the run is efficient.

To solve the problem, as described above, a cooling speed is obtained from the change, with time, of the milk temperature detected by the milk temperature sensor T5 attached to the outer peripheral surface of the inner container 20A, the number of the rotations of the compressor 2 is adjusted so as to complete the cooling run in a required cooling time set beforehand, and the cooling capability is controlled. That is, in a case where the amount of the milk to be cooled is small, and there is calculated the time which is shorter than the predetermined required time for completing the cooling at the predetermined temperature, control is performed to lower the number of the rotations of the compressor 2. In consequence, since the evaporation temperature can be raised, and the efficiency of the refrigeration cycle can be enhanced, it is possible to reduce energy consumption during the cooling run while satisfying a predetermined cooling performance and maintaining the quality of the milk. It is to be noted that in consideration of the efficiency of the compressor 2, a conversion efficiency of an inverter and the like, priority is given to the run at a frequency with the highest efficiency in the compressor 2. Therefore, when the amount of the milk is sufficiently small, the cooling run is sometimes completed for a time shorter than the predetermined required cooling time.

Next, there will be described an operation of the hot water supply circuit 30 during the cooling run. During the cooling run, the circulating water pump 32 of the hot water supply circuit 30 is operated, and the low-temperature hot water or the water passes from the lower portion of the hot water storage tank 31 through the low-temperature pipe 34, and flows through the circulating water pump 32 and the flow rate adjustment valve 33 into the inlet of the water channel 3B of the water heat exchanger 3. In the water heat exchanger 3, as described above, the water flowing through the water channel 3B exchanges the heat with the refrigerant flowing through the radiator 3A, and is thereby heated to form the high-temperature hot water. The high-temperature hot water which has exited from the water channel 3B of the water heat exchanger 3 passes through the high-temperature pipe 35 of the hot water supply circuit 30, and is poured from the upper portion of the hot water storage tank 31 into the hot water storage tank 31. In the hot water storage tank 31, the high-temperature hot water is poured from the upper portion of the tank, and the water is taken out of the lower portion of the tank. Therefore, a density difference due to the difference of the water temperature is utilized to store the high-temperature water in an upper portion of the tank and store the low-temperature water in a lower portion of the tank.

Moreover, the flow rate adjustment valve 33 adjusts the flow rate of the water so that the temperature of the hot water in the outlet of the water channel 3B of the water heat exchanger 3 indicates a predetermined value. That is, when the temperature of the hot water of the outlet of the water channel 3B is higher than the predetermined temperature, the open degree of the flow rate adjustment valve 33 is enlarged to increase the flow rate of the water. Conversely, when the temperature of the hot water in the outlet of the water channel 3B is low, the open degree of the flow rate adjustment valve 33 is reduced to decrease the flow rate of the water. It is to be noted that the temperature of the hot water of the water channel 3B outlet is detected by the outlet hot water temperature sensor T2 attached to the high-temperature pipe 35, and the predetermined temperature is a temperature suitable for the cleaning application or another hot water supply application, and is specifically about 50 to 85°C.

As described above, during the cooling run of the cooling device 1 in the present example, the milk immediately after drawn and introduced into the cooling container 20 is cooled at the predetermined temperature in order to maintain the quality of the milk. Moreover, the water is boiled by the release of the heat on the high-temperature side of the refrigeration cycle circuit 10, and the hot water can be stored in the hot water storage tank 31.

Next, a low-temperature insulating run will be described. When the temperature of the milk reaches the predetermined value by the above-described cooling run, the compressor 2 is stopped, the expansion valve 4 is fully closed, the circulating water pump 32 is stopped, and the stirrer 21 is stopped to end the cooling run. In this case, the cooling container 20 is insulated with the insulating material 20C, but the temperature of the milk rises owing to invasion of the heat from the outside during storage for a long time.

To solve the problem, during the low-temperature insulating run, even in a state in which the compressor 2 and the like are stopped, the temperature of the milk stored in the cooling container 20 continues to be detected by the milk temperature sensor T5 (hereinafter referred to as stand-by). It is assumed that when the milk temperature reaches the predetermined value or more, the cooling run is started to cool the milk. Moreover, when the milk temperature is lowered at the predetermined temperature by the cooling run during the low-temperature insulating run, the cooling run is stopped to achieve a standby state again. The predetermined temperature at which the cooling run is started during the low-temperature insulating run is specifically about 4.5°C, and the predetermined temperature at which the cooling run is stopped is about 4°C.

When the expansion valve 4 is fully closed during the standby, together with the function of the check valve (not shown) disposed between the evaporator 5 and the accumulator 6 on the suction tube 14, the refrigerant flow from the high-pressure side of the refrigeration cycle circuit 10 to the evaporator 5 is prevented, and the invasion of the heat with respect to the milk as the cooling object is inhibited. It is to be noted that instead of the check valve (not shown), an interrupting valve (not shown) is disposed on the suction tube 14. Alternatively, instead of the expansion valve 4, an interrupting valve (not shown) is disposed on the low-pressure refrigerant pipe 13 or the high-pressure refrigerant pipe 12. Even when the interrupting valve is closed at a standby time during the low-temperature insulating run, a similar effect can be obtained.

Here, it is assumed that the stirrer 21 is intermittently driven at certain intervals at the standby time during the low-temperature insulating run. For example, a stirring run is performed for two minutes every 30 minutes. In a state in which the stirrer 21 is stopped, a temperature distribution in forming layers is generated in the cooling container 20 owing to the density difference due to a temperature difference. Therefore, the temperature cannot correctly be measured.

Since the operation in the cooling run during the low-temperature insulating run is similar to that of the above-described cooling run during the milking, detailed description thereof is omitted here. However, it is assumed that the compressor 2 is operated most efficiently with the number of the rotations regardless of the amount of the milk.

The cooling run and the low-temperature insulating run have been described above with respect to the introduction of the milk during the milking. Next, there will be described run patterns of the cooling run and the low-temperature insulating run in a general farm.

In the general farm, the milking is performed about twice or three times per day. In the second and subsequent milking operations, the milk immediately after drawn is additionally introduced into the cooling container 20 in which the cooled milk is stored to be cold. As a result, since the temperature of the milk in the cooling container 20 rises, the cooling run is started. As described above, when the predetermined temperature is reached, the cooling run is stopped to perform the low-temperature insulating run.

Moreover, there are a case where the milk is taken out of the cooling container 20 (a cargo of the milk is collected) every day and a case where the milk is taken out every other day. Therefore, from the first milking till the collection of the cargo of the milk, the cooling run and the low-temperature insulating run after the introduction of the milk are repeatedly performed twice to six times. It is to be noted that during the collection of the cargo of the milk, the milk takeout valve 23 is opened, and the milk is taken out of the takeout pipe 26 connected to the cooling container 20.

Moreover, a cleaning run will be described. This cleaning run is an important step for keeping the cooling device and associated units to be clean, inhibiting propagation of bacteria and securing the quality of the milk.

Usually, the cooling container 20 is cleaned after taking out the milk from the cooling container 20. Therefore, in a case where the cargo is collected every day, the cleaning is performed once per day. In a case where the cargo is collected every other day, the cleaning is performed once in two days. The milking machine and the milking pipeline are cleaned every time the milking is completed, and are cleaned twice or three times per day.

A cleaning step of cleaning the cooling container 20 is basically the same as that of cleaning the milking pipeline or the like. That is, as shown in FIG. 6, there are performed a rinsing step by water, a rinsing step by low-temperature hot water, a washing step by a plurality of types of detergents such as an alkaline detergent and an acidic detergent, and a sterilizing step by a sterilizing agent. In each of such steps, the hot water adjusted at the predetermined temperature or the water is supplied. Moreover, the predetermined amount of a predetermined type of detergent is supplied. Thereafter, a cleaning liquid (mixed liquid of the hot water or the water with the detergent) is circulated through the device for the predetermined time to clean the device. Thereafter, the cleaning liquid is discharged.

Moreover, the above-described steps are performed in a predetermined order a plurality of times as needed. For example, in the case shown in FIG. 6, first the rinsing step by the water is performed. Subsequently, after performing a rinsing step S1a by the low-temperature hot water, an alkali washing step S2a by the high-temperature hot water and an alkaline detergent, a rinsing step S1b by the low-temperature hot water, an acid washing step S2b by the high-temperature hot water and an acid detergent and a rinsing step by the water, a sterilizing step by the sterilizing agent is performed.

In the rinsing step by the water, the milk takeout valve 23 and the discharge valve 55 of the automatic cleaning circuit 50 are closed, the divider valve 54 is opened, the cleaning hot water supply valve 40 of the hot water supply circuit 30 is opened, and the predetermined amount of the water at the predetermined temperature is introduced into the cooling container 20 successively via the hot water supply pipe 39, the automatic cleaner 51 and the cleaning pipe 56. At this time, the temperature of the water to be supplied is adjusted by the cleaning mixture valve 38 so that the water temperature detected by the temperature sensor T3 indicates a preset temperature. Therefore, the open device of the cleaning mixture valve 38 is adjusted so as to mainly allow the water to flow from the low-temperature takeout pipe 37. It is to be noted that since the water supply valve 41 is usually constantly opened, the amount of the city water corresponding to the amount of the water supplied to the automatic cleaner 51 is supplied from the water supply pipe 42 to a system of the hot water supply circuit 30.

After the necessary amount of the water is supplied to the cooling container 20, the cleaning hot water supply valve 40 is closed to stop the water supply, and the cleaning circulation pump 52 is driven. Accordingly, the cleaning liquid (water in this case) flows from the cooling container 20 through the cleaning return pipe 57, the automatic cleaner 51 and the cleaning pipe 56, respectively, returns to the cooling container 20, and circulates through the automatic cleaning circuit. In consequence, dirt in the cooling container 20 due to the milk can be removed. It is to be noted that in the rinsing step, when the cleaning liquid is injected from the cleaning pipe 56 into the cooling container 20, to make efficient cleaning possible, the cleaning liquid is jetted from a nozzle, and sprayed to each portion in the cooling container 20 without any unevenness. If necessary, the stirrer 21 may be operated.

After circulating the water for the predetermined time, the cleaning circulation pump 52 is stopped, the discharge valve 55 is opened, and the cleaning liquid in the automatic cleaning circuit 50 is discharged from the discharge tube 58.

The operations of the rinsing steps S1a, S1b by the hot water is basically the same as the operation of the rinsing step by the water. The steps are different only in that the set temperature of the hot water to be supplied is high. The temperature of the hot water to be supplied is adjusted with the cleaning mixture valve 38 so that the temperature of the hot water detected by the temperature sensor T3 indicates the preset temperature. Therefore, in the cleaning mixture valve 38, the water from the low-temperature takeout pipe 37 is mixed with the high-temperature hot water from the high-temperature takeout pipe 36, and the open degree of the valve is adjusted so as to indicate the predetermined temperature.

In the washing steps S2a, S2b by the detergents, in addition to the above operation of the rinsing step by the hot water, an operation of introducing the detergent is performed. The milk takeout valve 23 and the discharge valve 55 of the automatic cleaning circuit 50 are closed, and the divider valve 54 is opened. Moreover, when the cleaning hot water supply valve 40 of the hot water supply circuit 30 is opened, the predetermined amount of the hot water at the predetermined temperature is introduced successively via the hot water supply pipe 39, the automatic cleaner 51 and the cleaning pipe 56. Simultaneously, the predetermined amount of the predetermined type of detergent is supplied from a container (not shown) of the predetermined type of detergent via the detergent supply port 53, and mixed with the hot water in the automatic cleaner 51.

The detergent is supplied by detergent supply pump means (not shown). The predetermined amount of the predetermined type of detergent is supplied in accordance with each step, and the amount of the detergent to be supplied is adjusted by adjusting a time for driving a detergent supply pump (not shown).

It is to be noted that since the operation of circulating and discharging the cleaning liquid in the washing steps S2a, S2b by the detergent is similar to that of the rinsing step, detailed description thereof is omitted.

The operation of the sterilizing step is basically the same as that of the washing steps S2a, S2b by the detergent. The operation is different only in that the detergent to be injected is the sterilizing agent, and in the circulating time or the like. The sterilizing step is performed in accordance with the next use time, and the sterilizing agent (mixed liquid of the sterilizing agent and the water or the hot water) is left to stand for a predetermined time while being held in the system of the cooling container 20 or the automatic cleaning circuit 50. In consequence, a sterilizing effect is enhanced. There is omitted detailed description of an operation which is common to the rinsing step and the washing steps S2a, S2b by the detergent.

There has been described above a case where the cooling container 20 is cleaned in each step of the cleaning run. Even in a case where an associated unit other than the cooling container 20, such as the milking pipeline (not shown), is cleaned, however, the basic operation is similar to the above operation. In this case, the cleaning run is performed by the second cleaning circuit, and the cleaning liquid passes from the automatic cleaner 51 through the second cleaning forward pipe 62, and is fed to a unit to be cleaned. The liquid further passes through the second cleaning return pipe 61, and returns to the automatic cleaner 51. The second cleaning circuit is provided with a cleaning circulation pump or replacing means (not shown), a changeover valve (not shown), a discharge valve (not shown) or the like as needed. During the circulating, the cleaning liquid is circulated by the means which replaces the cleaning circulation pump of the second cleaning circuit. During the discharging, the discharge valve of the second cleaning circuit is opened to discharge the cleaning liquid.

It is to be noted that at the standby time of the low-temperature insulating run, to reduce heat losses due to entrance of the refrigerant into the evaporator 5, the expansion valve 4 is fully closed, but during the cleaning run, especially when the washing by the hot water is performed, to avoid an abnormally high pressure in the expansion valve 4, the expansion valve 4 is opened.

Moreover, when a demanded hot water supply load is large, and the only amount of the hot water generated by cooling the milk comes short, the cooling run may be performed to generate the hot water even during the cleaning run. For example, in the sterilizing step, the cooling run is performed while a sterilizing liquid remains to be held in the cooling container 20. In consequence, a highly efficient hot water supply run (heat pump run) is possible in which the sterilizing liquid is used as a heat source. Furthermore, if necessary, the water may additionally be introduced as the heat source into the cooling container 20 to perform the cooling run (hot water supply run).

Next, there will be described an operation of supplying the hot water to an application other than the cleaning application. The hot water is supplied to a hot water supply load other than the cleaning application by opening the hot water supply valve 46.

The hot water supply valve 46 is, for example, a faucet for hot water supply or the like, and a plurality of hot water supply valves are sometimes arranged. When the hot water supply valve 46 is opened, the high-temperature hot water stored in the hot water storage tank 31 flows from the upper portion of the hot water storage tank 31 via the high-temperature takeout pipe 36 into the mixture valve 45. Moreover, the water flows through the mixture valve 45 via the low-temperature takeout pipe 37 connected to the lower portion of the hot water storage tank 31. Moreover, after the high-temperature hot water is mixed with the water in the mixture valve 45, and adjusted at the predetermined temperature, the hot water is supplied to each load equipment via the hot water supply valve 46.

It is to be noted that the temperature of the hot water to be supplied is detected by the temperature sensor (not shown) disposed on the pipe which connects the mixture valve 45 to the hot water supply valve 46. It is to be noted that since the water supply valve 41 is usually constantly opened, the amount of the city water corresponding to the amount of the hot water supplied to the other load equipment is supplied from the water supply pipe 42 into the system of the hot water supply circuit 30.

Next, there will be described outlet hot water temperature control during the cooling run to make the efficient run possible in more detail. To clean an associated equipment such as the cooling container 20 or the milking pipeline, the hot water at a comparatively high temperature is required. For example, as shown in FIG. 6, the temperature of the hot water required for the washing steps S2a, S2b by the detergent is about 80°C. On the other hand, the temperature of the hot water required for a general hot water supply load equipment is comparatively low at about 40°C. Therefore, when the only run to generate the high-temperature hot water required for the cleaning is performed, it cannot necessarily be said that the run is efficient, because the hot water boiled once at the high temperature is mixed with the water for use in a case where the hot water at the comparatively low temperature is utilized.

To solve the problem, in the cooling device 1 of the present example, in the cooling run during the milking, for a predetermined time after start of the milking, a medium-temperature (first set temperature) hot water cooling run is performed in which the outlet hot water temperature is comparatively lowered. After elapse of the predetermined time, a high-temperature (second set temperature) outlet hot water cooling run is performed in which the outlet hot water temperature is raised. It is assumed that the high-temperature hot water is used in the cleaning application, and the medium-temperature hot water is mainly used in the application other than the cleaning.

FIG. 7 shows a relation between progress of the cooling run and the outlet hot water temperature in a case where the milking is performed twice per day, and the cargo is collected every other day. It is to be noted that in FIG. 7, a time axis between the cooling runs is represented by a short interval for the sake of expression. First, with the start of the first milking, the cooling run is started. In this case, for the predetermined time, a medium-temperature outlet hot water cooling run M1a is performed in which the hot water is boiled at the comparatively low temperature (first set temperature) of about 65°C. Moreover, after the elapse of the predetermined time after the start of the cooling, a high-temperature outlet hot water cooling run M2a is performed in which the hot water is generated at the comparatively high temperature (second set temperature) of about 85°C.

After performing the medium-temperature outlet hot water cooling run M1a to generate the low-temperature hot water, the high-temperature outlet hot water cooling run M2a is performed to generate the high-temperature hot water. Therefore, after the medium-temperature hot water is stored in the hot water storage tank 31, the high-temperature hot water is introduced. Therefore, it is possible to store the high-temperature hot water in the upper portion of the hot water storage tank 31, and store the medium-temperature hot water in the lower portion thereof without disturbing any formed temperature layer due to the density difference of the hot water in the hot water storage tank 31.

After the cooling run ends, the pipeline or the like is cleaned after the milking. During the cleaning, first the high-temperature hot water stored in the upper portion of the hot water storage tank 31 is used. Thereafter, the medium-temperature hot water is mainly utilized in the hot water supply load other than the cleaning application.

Moreover, since the amount of the high-temperature hot water for use in cleaning the milking pipeline or the like is predictable, the required time of the high-temperature outlet hot water cooling run M2a is determined from the required amount of the high-temperature hot water, and the predetermined time for performing the medium-temperature outlet hot water cooling run M1a is also obtained. That is, since the cooling capability and the hot water supply capability during the cooling run can be estimated from a rotation frequency of the compressor 2, the required time for generating the necessary amount of the high-temperature hot water is obtained. It is to be noted that as already described, from the change, with time, of the milk temperature detected by the milk temperature sensor T5 attached to the outer peripheral surface of the inner container 20A of the cooling container 20 and the number of the rotations of the compressor 2, it is possible to calculate the amount of the milk introduced during each milking, and it is simultaneously possible to calculate the amount of the hot water which can be generated by cooling the milk. Thus, the high-temperature outlet hot water cooling run M2a is performed so that the only necessary amount of the hot water can be supplied to the cleaning application.

The pressure-enthalpy graph of FIG. 5 shows a difference of the refrigeration cycle between the case where the medium-temperature outlet hot water cooling run M1a is performed and the case where the high-temperature outlet hot water cooling run M2a is performed. The refrigeration cycle denoted with a to b1 to c1 to d corresponds to the high-temperature outlet hot water cooling run M2a, and the refrigeration cycle denoted with a to b2 to c2 to d corresponds to the medium-temperature outlet hot water cooling run M1a. In the graph, the state a corresponds to the suction portion of the compressor 2, and the states b1 and b2 correspond to the discharge side of the compressor 2.

A theoretical power of the compressor 2 is obtained by multiplying enthalpy differences between the state b1 and a state b2 and the state a, that is, dh1, dh2 by a refrigerant circulated amount. Since dh1 corresponds to the high-temperature outlet hot water cooling run M2a, and dh2 corresponds to the medium-temperature outlet hot water cooling run M1a, the medium-temperature outlet hot water cooling run M1a apparently has a smaller compression power. As a result, it is seen that a coefficient of performance (COP) of the refrigeration cycle increases. Therefore, the only necessary amount of the high-temperature hot water necessary for the cleaning is generated. For the application other than the cleaning application, the medium-temperature outlet hot water cooling run M1a is performed to generate the hot water at the comparatively low temperature. In consequence, the efficiency of the cooling device is enhanced, and the energy consumption can be reduced.

The outlet hot water temperature control has been described above in accordance with the cooling run during the first milking, but similar function and effect are obtained even during the second and subsequent milking. In FIG. 7, M1a, M1b, M1c and M1d denote medium-temperature outlet hot water cooling runs to generate the hot water at the first set temperature, and M2a, M2b, M2c and M2d denote high-temperature outlet hot water cooling runs to generate the hot water at the second set temperature. As described above, FIG. 7 shows the example in which the milking is performed twice per day, and the cargo is collected every other day. Therefore, after the fourth cooling run ends, the cargo of the milk is collected. Therefore, since it is necessary to thereafter clean the cooling container 20, the high-temperature outlet hot water cooling run M2d during the fourth cooling run is performed for a long time as compared with the high-temperature outlet hot water cooling runs M2a, M2b and M2c during the first to third cooling runs in which the cooling container 20 is not cleaned.

There has been described above an example of the constitution in which the hot water is supplied even to the application of cleaning a part other than the cooling container 20, such as the milking pipeline, but the present example may be constituted so that the hot water is supplied to the cleaning application of cleaning the cooling container 20 only, and the hot water is supplied to the application other than the cleaning application.

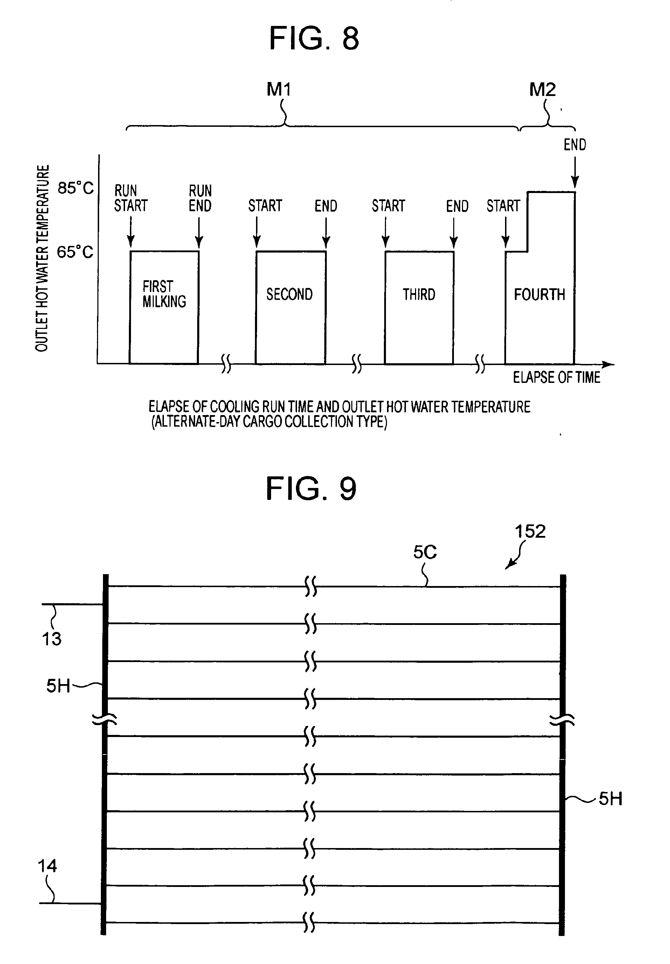

In this case, since the only cleaning of the cooling container 20 requires the high-temperature hot water, the high-temperature hot water may be generated for the only predetermined time before the last cooling run ends. FIG. 8 shows an example of such a case, M1 denotes a medium-temperature outlet hot water cooling run of generating the hot water at a first set temperature, that is, a comparatively low temperature, and M2 denotes a high-temperature outlet hot water cooling run of generating the hot water at a second set temperature, that is, a high temperature. A method of determining required times of M1 and M2 is similar to that in a case where the high-temperature outlet hot water cooling run is performed every time as described above, and the only amount of the high-temperature hot water required for cleaning the cooling container 20 is generated.

As described above, according to the present example, simultaneously with the cooling of the milk as the cooling object, the heat on the high-temperature side of the refrigeration cycle circuit 10, generated in the cooling process, is effectively utilized to boil the water. Moreover, the transitional critical cycle using the carbon dioxide refrigerant is utilized to thereby obtain the high-temperature outlet hot water, and this hot water can be used in cleaning the cooling container 20 or the like. Therefore, as compared with a conventional case where the water has heretofore been boiled with a boiler or the like and supplied for the cleaning application, energy to be consumed can largely be reduced. Since the heat released from the high-temperature side of the refrigeration cycle to the atmosphere can be reduced, a rise in ambient temperature can be suppressed.

Furthermore, since the number of the rotations of the compressor 2 is controlled in accordance with the amount of the milk to be cooled, the efficient cooling run is possible. In addition, even when the outlet hot water temperature is preferably controlled in accordance with the application, the efficiency is enhanced. As a result, the energy consumption can be reduced.

### (Example 2)

A second example will be described as another embodiment of the present invention. A basic constitution of Example 2 is similar to that of the cooling device 1 of Example 1 shown in FIG. 1. The present example is different from the first example in that an evaporator 152 shown in FIG. 9 is disposed instead of the evaporator 5.

The evaporator 152 is constituted of a header tube 5H constituted by working a round tube made of copper; and a plurality of heat transfer tubes 5C similarly made of copper. The heat transfer tubes 5C are bonded to the header tube 5H so that a refrigerant flows through the heat transfer tubes. The header tube 5H is bonded to a low-pressure refrigerant pipe 13 into which the refrigerant flows, and a suction tube 14 out of which the refrigerant flows.

In the header tube 5H, partitions which interrupt the flow of the refrigerant can be arranged if necessary. Accordingly, it is possible to set, to predetermined values, the number of paths through which the refrigerant flows (the number of the heat transfer tubes 5C to be arranged in parallel with the flow), a total length of the heat transfer tube 5C per path in a flow direction and the like. A plurality of assemblies each constituted by bonding the header tube 5H to a plurality of heat transfer tubes 5C may be used to constitute the whole evaporator 152.

Grooves are disposed in inner surfaces of the heat transfer tubes 5C in order to promote heat transfer. As shown in FIG. 3, the heat transfer tubes 5C are heat-transferably bonded to the outside of an inner container 20A of a cooling container 20 in the same manner as in the cooling device 1 of Example 1. Moreover, to promote the heat transfer from the refrigerant to a cooling object, heat transfer putty or the like is used in a void 5D in the vicinity of a bonded portion between the inner container 20A and each heat transfer tube 5C. Furthermore, the heat transfer tubes 5C are covered with a heat transfer promoting sheet 5B such as an aluminum sheet or a copper plate bent into a shape similar to that of the heat transfer promoting sheet 5B. When the copper plate is used, the heat transfer putty or the like is used in the voids 5D between the copper plate and the heat transfer tubes, and the plate is disposed so as to come into contact with an outer surface of the inner container 20A.

Since a pressure resistance can be enhanced in the evaporator using the round tube as in the present example, the evaporator is suitable for a transitional critical cycle in which carbon dioxide is used as the refrigerant. An inner pressure of carbon dioxide is high as compared with a conventional HFC-based refrigerant or the like. It is to be noted that the evaporator 152 shown in FIG. 9 is one example showing a shape in a case where the round tube is worked to constitute the evaporator, the worked shape is not limited to the shape of the evaporator 152 of the present example or the shape of the evaporator 5 in Example 1 shown in FIG. 4, and various bent shapes or header tube worked shapes may be combined. A material of the heat transfer tube 5C is not limited to that of the present example, and, for example, stainless steel may be used.

Since operations, functions and effects of a cooling run, a low-temperature insulating run, a cleaning run and the like in Example 2 are similar to those of the cooling device 1 in Example 1, detailed description thereof is omitted.

### (Example 3)

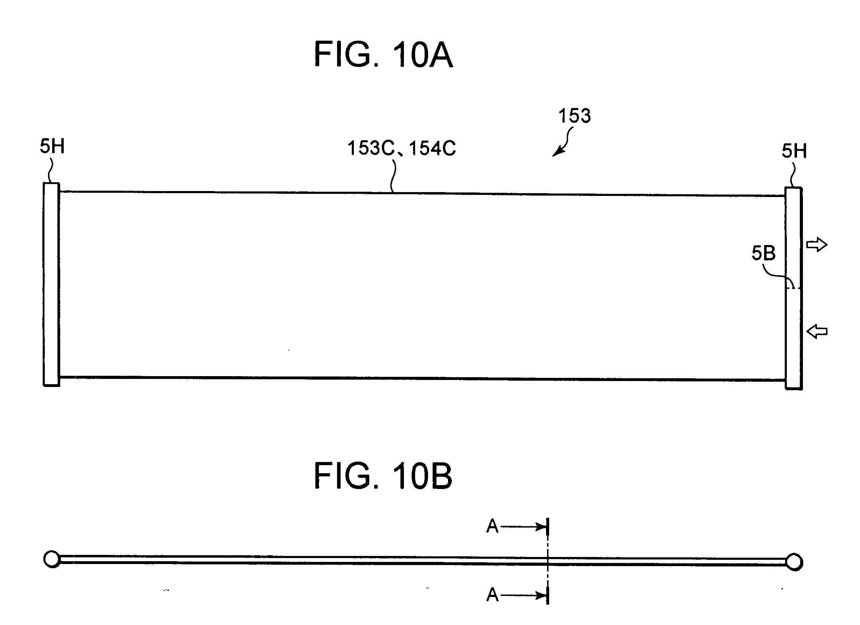

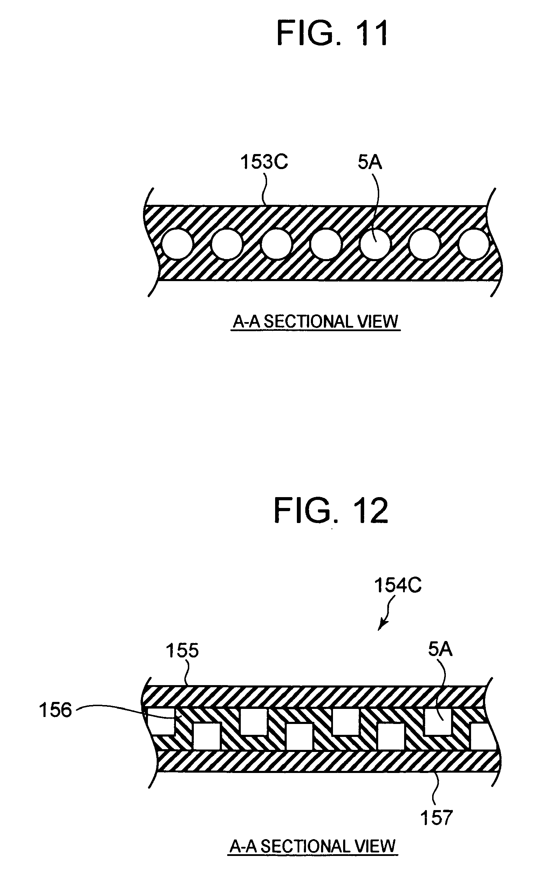

Example 3 will be described as still another embodiment of the present invention. A basic constitution of Example 3 is similar to that of the cooling device 1 of Example 1 shown in FIG. 1. The present example is different in that instead of the evaporator 5, an evaporator 153 shown in FIG. 10 is disposed. It is to be noted that FIG. 10A is a plan view of the evaporator 153, and FIG. 10B is a bottom plan view of the evaporator 153. FIG. 11 shows a sectional view of the evaporator 153 cut along the A-A line of FIG. 10. In the evaporator 153, as shown in FIG. 11, a flat tube having a plurality of small-diameter holes 5A constituting refrigerant channels of a refrigeration cycle circuit 10 is constituted as a heat transfer tube 153C, and a header tube 5H is bonded so as to communication with the small-diameter holes 5A of the heat transfer tube 153C and form the refrigerant channels.

The header tube 5H is provided with a refrigerant inlet portion into which a refrigerant flows and a refrigerant outlet portion out of which the refrigerant flows. In the header tube 5H, a partition 5B which interrupts the flow of the refrigerant can be disposed if necessary. Accordingly, it is possible to set, to predetermined values, the number of paths through which the refrigerant flows (the number of the heat transfer tubes 153C or the small-diameter holes 5A to be arranged in parallel with the flow), a total length of the heat transfer tube 153C per path in a flow direction and the like. A plurality of assemblies each constituted by bonding the header tube 5H to a plurality of heat transfer tubes 153C may be used to bond the header tube so that the refrigerant inlet portions and the refrigerant outlet portions constitute the refrigerant channels, thereby constituting the whole evaporator 153.

Grooves may be disposed in inner surfaces of the small-diameter holes 5A as the refrigerant channels in order to promote heat transfer. A sectional shape of each channel may be a shape other than a circular shape, such as a quadrangular shape. A material of the heat transfer tube 153C is, for example, aluminum, and is produced by extrusion molding or the like. In the same manner as in the cooling device 1 of Example 1, the heat transfer tube 153C is heat-transferably bonded to the outside of an inner container 20A of a cooling container 20, and a void between the heat transfer tube and an outer covering 20B is filled with a insulating material 20C.

Since a pressure resistance of the heat transfer tube 153C constituted of the flat tube including the plurality of small-diameter holes 5A as in the present example is high, the evaporator is suitable for a transitional critical cycle in which carbon dioxide is used as the refrigerant. An inner pressure of carbon dioxide is high as compared with a conventional HFC-based refrigerant or the like. It is possible to secure a large contact area between the heat transfer tube and the inner container 20A of the cooling container 20. As a result, there are advantages that a contact heat resistance is reduced and that efficiency of a cooling run is enhanced.

Since operations, functions and effects of the cooling run, a low-temperature insulating run, a cleaning run and the like in Example 3 are similar to those of the cooling device 1 in Example 1, detailed description thereof is omitted.

### (Example 4)

Next, a fourth embodiment of the present invention will be described. It is assumed that a basic constitution of Example 4 is the same as that of the cooling device 1 of Example 1 described above, and only the evaporator 5 is replaced. Example 4 is different from Example 3 only in that there is used a heat transfer tube 154C having a sectional shape shown in FIG. 12, and another part is similar to that of Example 3.

The heat transfer tube 154C of Example 4 is constituted by successively laminating a flat plate 155, a corrugated plate 156 pressed and worked into a waveform, and another flat plate 157, and bonding the plates by brazing or the like. Voids sandwiched and formed between the corrugated plate 156 and the flat plate 155 or 157 are refrigerant channels 5A.

Here, each refrigerant channel 5A does not have to be necessarily a single continuous linear channel from an inlet to an outlet. That is, a slit which communicates with the adjacent channel or the like may be disposed, or a meandering channel may be formed. In this case, various shapes can be employed as the corrugated plate 156. For example, the corrugated plate 156 may have a shape of a so-called offset fin, a louvered fin, a wavy fin, a herringbone fin, a serrate fin, a porous plate fin or the like for general use in a plate fin heat exchanger or the like.

Since a high pressure resistance can be secured in the above-described heat transfer tube 154C of Example 4 in the same manner as in the evaporators of Examples 1 to 3 described above, the evaporator is suitable for a transitional critical cycle in which a carbon dioxide refrigerant is used. An operating pressure of the carbon dioxide refrigerant is high as compared with a conventional HFC-based refrigerant. In addition, according to the present example, the flat heat transfer tube having a larger area can be worked easily and inexpensively.

Since operations, functions and effects of a cooling run, a low-temperature insulating run, a cleaning run and the like in Example 4 are similar to those of the cooling device 1 in Example 1, detailed description thereof is omitted.

### (Example 5)

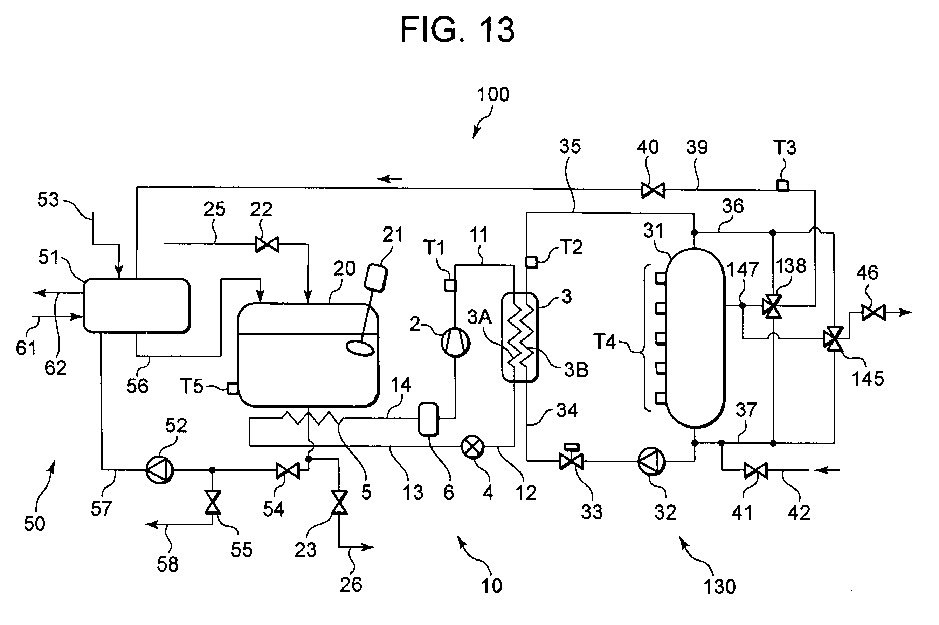

Example 5 as a fifth embodiment of the present invention will be described. FIG. 13 is a circuit diagram showing a cooling device 100 in the present example. In FIG. 13, constituting elements which produce the same functions and effects as those of the first example shown in FIG. 1 or functions and effects similar to those of the first example are denoted with the same reference numerals.

The cooling device 100 of the Example 5 is different from the cooling devices of Examples 1 to 4 in that a hot water storage tank 31 includes a medium-temperature takeout pipe 147 which takes out hot water at a medium temperature, a cleaning mixture valve 138 and a mixture valve 145 which mix high-temperature hot water and the medium-temperature hot water, or the medium-temperature hot water and water are disposed instead of the cleaning mixture valve 38 and the mixture valve 45, and there are arranged a plurality of stored hot water temperature sensors T4 which detect a temperature of the hot water in the hot water storage tank 31.

The medium-temperature takeout pipe 147 takes out the medium-temperature hot water stored in the hot water storage tank 31, and is connected to a portion below a high-temperature takeout port connected to a high-temperature takeout pipe 36 of the hot water storage tank 31 and which is above a low-temperature takeout port connected to a low-temperature takeout pipe 37. The high-temperature takeout pipe 36, the medium-temperature takeout pipe 147 and the low-temperature takeout pipe 37 are connected to the cleaning mixture valve 138, and the cleaning mixture valve 138 is further connected to a hot water supply pipe 39.

The cleaning mixture valve 138 mixes the high-temperature hot water taken out of the hot water storage tank 31 via the high-temperature takeout pipe 36 with the medium-temperature hot water taken out via the medium-temperature takeout pipe 147, or mixes the medium-temperature hot water taken out via the medium-temperature takeout pipe 147 with water taken out of the low-temperature takeout pipe 37 to adjust the temperature of the hot water into a predetermined value. It is to be noted that the temperature of the hot water to be supplied is detected by a temperature sensor T3 attached to the hot water supply pipe 39. The hot water adjusted into the predetermined temperature is supplied to an automatic cleaner 51 through the hot water supply pipe 39.

The mixture valve 145 supplies the hot water to an application other than cleaning, is connected to the upper portion of the hot water storage tank 31 via the high-temperature takeout pipe 36, connected to the portion below the high-temperature takeout port of the hot water storage tank 31 and above the low-temperature takeout port of the tank via the medium-temperature takeout pipe 147, connected to the lower portion of the hot water storage tank 31 via the low-temperature takeout pipe 37, and further connected to a load equipment other than the cleaning application via a hot water supply valve 46.

The plurality of stored hot water temperature sensors T4 are attached to an outer surface of the hot water storage tank 31 at varied heights, and measure the temperature of the hot water stored in the hot water storage tank 31. Accordingly, a temperature distribution in the hot water storage tank 31 can be grasped, and an amount of the stored hot water can be obtained. It is also possible to obtain reference data by which it is judged whether to take the hot water out of the high-temperature takeout pipe or the medium-temperature takeout pipe in a case where the hot water is used.

Subsequently, there will be described an operation of the cooling device 100 of Example 5. Since operations of a cooling run and a low-temperature insulating run are similar to those of the cooling device 1 of Example 1, detailed description thereof is omitted. Here, there will be described mainly an operation of supplying the hot water during the cleaning run and an operation of supplying the hot water to the application other than the cleaning. As already described, during the cleaning run, as shown in FIG. 6, there are performed a rinsing step by water, a rinsing step by low-temperature hot water, a washing step by a plurality of types of detergents such as an alkaline detergent and an acidic detergent, and a sterilizing step by a sterilizing agent. There is used the water or the hot water having a water temperature suitable for each step.

To supply the water or the hot water to the automatic cleaner 51, a cleaning hot water supply valve 40 of a hot water supply circuit 130 is opened. Accordingly, the water or the hot water flows from the cleaning mixture valve 138 via the hot water supply pipe 39 to the automatic cleaner 51. The temperature of the water or the hot water to be supplied is adjusted with the cleaning mixture valve 138 so that the water temperature detected by the temperature sensor T3 indicates a preset temperature. Therefore, when the water is supplied to the automatic cleaner 51 as in the rinsing step by the water, an open degree of the cleaning mixture valve 138 is mainly adjusted so as to allow the water to flow from the low-temperature takeout pipe 37. It is to be noted that since a water supply valve 41 is usually constantly in an open state, the amount of city water corresponding to the amount of the water supplied to the automatic cleaner 51 is supplied from a water supply pipe 42 into a system of the hot water supply circuit 130.

In rinsing steps S1a, S1b by the hot water, the set temperature of the hot water to be supplied is higher than that in the rinsing step by the water. When the hot water at a predetermined temperature required for the rinsing steps S1a, S1b by the hot water is obtained by the mixing of the medium-temperature hot water from the medium-temperature takeout pipe 147 with the water from the low-temperature takeout pipe 37, in the cleaning mixture valve 138, the medium-temperature hot water from the medium-temperature takeout pipe 147 is mixed with the water from the low-temperature takeout pipe 37, and the hot water is supplied to the automatic cleaner 51.

Moreover, when the hot water at the predetermined temperature required for the rinsing steps S1a, S1b by the hot water is obtained by the mixing of the high-temperature hot water from the high-temperature takeout pipe 36 with the medium-temperature water from the medium-temperature takeout pipe 147, in the cleaning mixture valve 138, the high-temperature hot water from the high-temperature takeout pipe 36 is mixed with the medium-temperature hot water from the medium-temperature takeout pipe 147, and the hot water is supplied to the automatic cleaner 51.

In washing steps S2a, S2b by the detergent, there is used the hot water at a temperature higher than that in the rinsing steps S1a, S1b by the above-described hot water. Therefore, in the cleaning mixture valve 138, the high-temperature hot water from the high-temperature takeout pipe 36 is mainly mixed with the medium-temperature hot water from the medium-temperature takeout pipe 147, and the hot water is supplied to the automatic cleaner 51.

Next, there will be described an operation of supplying the hot water to the application other than the cleaning application. When the hot water is supplied to a hot water supply load other than the cleaning application, the hot water supply valve 46 is opened. The hot water supply valve 46 is, for example, a faucet for hot water supply or the like, and a plurality of hot water supply valves are sometimes arranged. The temperature of the hot water to be supplied is detected by a temperature sensor (not shown) disposed on a pipe which connects the mixture valve 145 to the hot water supply valve 46, and an open degree of the mixture valve 145 is adjusted (mixture ratio adjustment) so that the temperature indicates a required predetermined temperature.

In a case where the required hot water, that is, the water at a set hot water supply temperature is obtained by the mixing of the medium-temperature hot water from the medium-temperature takeout pipe 147 with the water from the low-temperature takeout pipe 37, the hot water stored in the hot water storage tank 31 flows through the mixture valve 145 via the medium-temperature takeout pipe 147. Simultaneously, the water flows through the mixture valve 145 via the low-temperature takeout pipe 37 connected to the lower portion of the hot water storage tank 31. Moreover, in the mixture valve 145, the medium-temperature hot water is mixed with the water. After the temperature of the mixture is adjusted into a predetermined temperature, the hot water is supplied to each load equipment via the hot water supply valve 46.

When the hot water at the set hot water supply temperature is obtained by the mixing of the high-temperature hot water from the high-temperature takeout pipe 36 with the medium-temperature hot water from the medium-temperature takeout pipe 147, the high-temperature hot water stored in the hot water storage tank 31 flows from the upper portion of the hot water storage tank 31 via the high-temperature takeout pipe 36 into the mixture valve 145. Simultaneously, the medium-temperature hot water flows through the mixture valve 145 via the medium-temperature takeout pipe 147. Moreover, in the mixture valve 145, the high-temperature hot water is mixed with the medium-temperature hot water. After the temperature of the mixture is adjusted into the predetermined temperature, the hot water is supplied to each load equipment via the hot water supply valve 46.

In a case where the hot water storage tank 31 does not have any medium-temperature takeout pipe 147 to take out the medium-temperature hot water as in the cooling device 1 of Example 1, even when the hot water at a comparatively low temperature is supplied, the high-temperature hot water in the upper portion of the hot water storage tank 31 is only used. In the present example, however, since the hot water storage tank 31 includes the medium-temperature takeout pipe 147 to take out the medium-temperature hot water, it is possible to positively feed the medium-temperature hot water in the hot water storage tank 31 to a load at a required comparatively low temperature.

For example, in the rinsing steps S1a, S1b by the hot water as shown in FIG. 6, the high-temperature hot water has to be used in the cooling device 1 of Example 1. In the present example, however, the medium-temperature hot water can be used. As a result, consumption of the high-temperature hot water can be reduced, it is possible to reduce a high-temperature outlet hot water cooling run to generate the high-temperature hot water with a low efficiency, and the run can be switched to a highly efficient medium-temperature outlet hot water cooling run. Therefore, energy consumption can further be saved.

Moreover, for example, even when the outlet hot water temperature during the cooling run is constantly kept to be constant, an effect of improving a performance in the present example can be obtained. Usually, in the hot water storage tank 31, owing to a density difference, the high-temperature hot water is stored in an upper portion of the tank, and the low-temperature water is stored in a lower portion of the tank. In addition, a mixed temperature layer region generated by heat exchange is seen between the high-temperature hot water and the water. When the hot water of this mixed layer is lower than a required hot water supply load temperature, the hot water cannot be used in a hot water supply application at all. In addition, when the medium-temperature hot water of the mixed layer flows into a water channel 3B of a water heat exchanger 3, a cooling capability and a COP of a refrigeration cycle remarkably drop. Therefore, according to the present example in which the medium-temperature hot water can positively be utilized, there is an advantage that the efficiency of the refrigeration cycle can be prevented from being lowered.

Furthermore, in the present example, since the plurality of stored hot water temperature sensors T4 attached to the outer peripheral surface of the hot water storage tank 31 at the varied heights measure the temperature of the hot water in the hot water storage tank 31, it is possible to obtain a vertical temperature distribution of the hot water and the amount of the hot water. In consequence, it is possible to easily judge a changeover timing of a high-temperature outlet hot water cooling run for securing the required amount of the hot water. When the hot water is utilized, the takeout pipe of the hot water storage tank 31 can easily be judged out of which the hot water is to be taken.

### (Example 6)

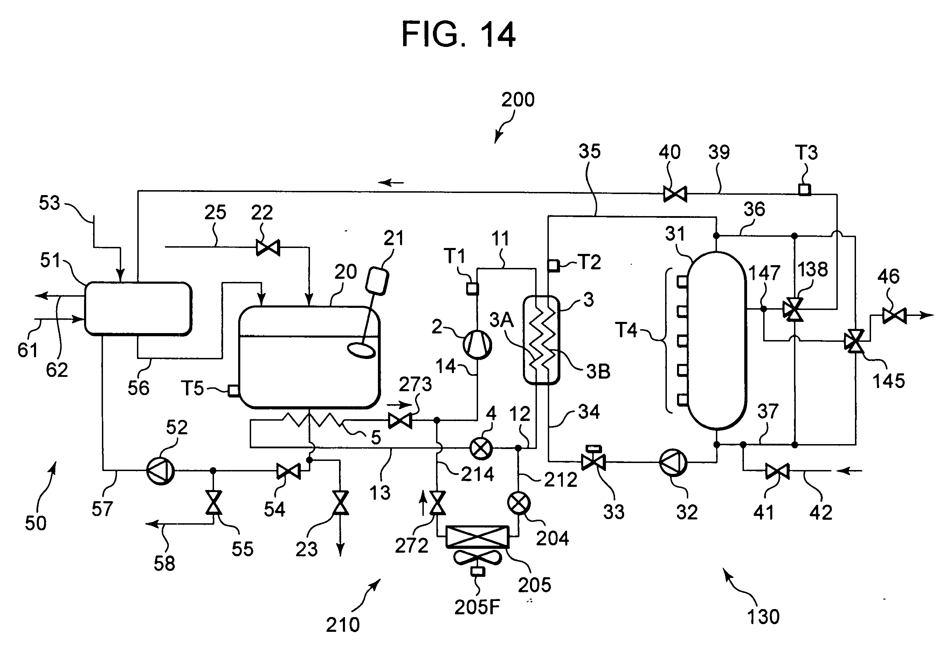

A sixth embodiment of the present invention will be described. FIG. 14 is a circuit diagram showing a cooling device 200 in Example 6 of the present invention. In FIG. 14, constituting elements which produce the same functions and effects as those of Example 5 shown in FIG. 13 or functions and effects similar to those of the example are denoted with the same reference numerals. The cooling device 200 of Example 6 is different from the cooling device 100 of Example 5 in that even in a case where cooling of milk as a cooling object is completed, a second evaporator is disposed so as to perform a hot water supply run to boil water. It is to be noted that description of a part similar to that of the cooling device 100 of Example 5 is omitted, and an only different part will be described hereinafter.

In the same manner as in the refrigeration cycle circuit 10 in the above-described examples, a refrigeration cycle circuit 210 is constituted so as to form a close circuit by successively connecting a compressor 2, a discharge pipe 11, a radiator 3A, a high-pressure refrigerant pipe 12, an expansion valve 4 as throttle means, a low-pressure refrigerant pipe 13, an evaporator 5 and a suction tube 14. The refrigeration cycle circuit further includes a second expansion valve 204, a second evaporator 205 and a second check valve or a second interrupting valve 272.

A second refrigerant channel is formed so that the channel is branched from the high-pressure refrigerant pipe 12, successively connected to a second high-pressure refrigerant pipe 212, the second expansion valve 204, the second evaporator 205, the second interrupting valve 272 and a second suction tube 214, and thereafter combined with the suction tube 14. The second evaporator 205 is, for example, a heat exchanger of a tube fin type or the like, and includes a fan 205F which sends air to the heat exchanger in order to absorb heat from the atmosphere. It is to be noted that a heat absorption source of the second evaporator 205 is not limited to the atmosphere, and another heat source may be used such as water, drainage, sun heat, or underground water.

The suction tube 14 which connects a suction portion of the evaporator 5 to that of the compressor 2 is provided with a check valve or an interrupting valve 273 on an upstream side (evaporator 5 side) of a combined portion between the suction tube and the second suction tube 214. A constitution of a water heat exchanger 3, a constitution of a cooling container 20, a constitution of the evaporator 5, and constitutions 152, 153 and 154C are similar to those of the refrigeration cycle circuit 10 in the above examples.

Next, with respect to an operation of the present cooling device 200 of Example 6, a part different from Example 5 will mainly be described in detail.

First, during a cooling run, basically the second expansion valve 204 is fully closed, and the second interrupting valve 272 is also closed. Therefore, a basic run operation is similar to that of the cooling device 100 of Example 5. However, to realize a more preferable run, the second expansion valve 204 and the second interrupting valve 272 may be adjusted to control a refrigerant amount.

To start the cooling run, the second expansion valve 204 is fully closed, and the second interrupting valve 272 is opened. Accordingly, a refrigerant in the second evaporator 205 is sucked by the compressor 2 and reduced. Contrarily, a refrigerant in the evaporator 5 increases. Here, since a pressure of the refrigeration cycle circuit 210 on a high-pressure side is not less than a critical pressure, a condensing function does not occur. Therefore, the amount of the refrigerant on the high-pressure side hardly changes. That is, according to the above operation of the interrupting valve 272, the refrigerant can sufficiently be supplied into the evaporator 5 in a state in which a milk temperature is high, and an evaporation temperature is high. In consequence, heat transmittance of the evaporator 5 is enhanced, and capability and efficiency of the cooling run are enhanced. After elapse of a predetermined time after the start of the run, the second interrupting valve 272 is closed. Moreover, even during the subsequent cooling run, the second interrupting valve 272 is closed.

Moreover, in a case where the milk temperature drops and the evaporation temperature drops while the cooling run continues, the second expansion valve 204 brought into the fully closed state as described above is slightly opened, and the refrigerant is allowed to flow from the high-pressure refrigerant pipe 12 via the second high-pressure refrigerant pipe 212 and the second expansion valve 204 into the second evaporator 205. Accordingly, the amount of the refrigerant in the second evaporator 205 increases. Contrarily, the refrigerant in the evaporator 5 decreases. The amount of the refrigerant in the evaporator 5 (the amount of the refrigerant in the second evaporator 205) is set to an appropriate value in accordance with the milk temperature in the cooling container 20 at that time. When the amount reaches an appropriate amount, the second expansion valve 204 is brought into the fully closed state again.

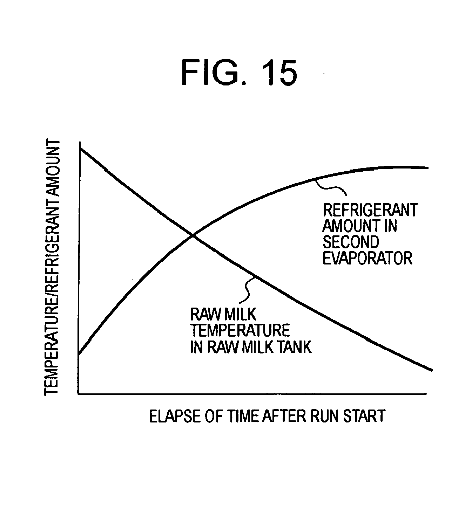

When the above operation is performed, as shown in FIG. 15, the amount of the refrigerant in the second evaporator 205 increases with the drop of the temperature of the milk. Therefore, conversely, the amount of the refrigerant in the evaporator 5 decreases. Accordingly, the evaporation temperature lowers, a surplus liquid refrigerant is sucked by the compressor 2, and it is possible to avoid a problem that the efficiency of a refrigeration cycle deteriorates or the compressor 2 breaks.

Moreover, a method of judging the appropriate refrigerant amount in accordance with the milk temperature in the cooling container 20 is based on a difference between a sucked refrigerant temperature detected by a suction temperature sensor (not shown) attached to the suction tube 14 and the evaporation temperature detected by a temperature sensor (not shown) attached to the evaporator 5, that is, a so-called degree of superheat. The second expansion valve 204 is opened or close so that this degree of superheat indicates a predetermined value. Specifically, when the milk temperature and the evaporation temperature drop, the refrigerant in the evaporator 5 becomes surplus, and the degree of superheat is reduced. Moreover, when the degree of superheat is below the predetermined value, the second expansion valve 204 is slightly opened, and the refrigerant is poured into the second evaporator 205. Conversely, when the amount of the refrigerant in the evaporator 5 decreases, and the degree of superheat is above the predetermined value, the second expansion valve 204 is fully closed again.

It is to be noted that as described above in Example 1, the milk temperature is detected by a milk temperature sensor T5, an open degree of the expansion valve 4 is controlled so that the discharge temperature detected by a discharge temperature sensor T1 indicates a predetermined value, and the rotational speed of the compressor 2 is controlled so as to complete the cooling within a predetermined required cooling time or obtain an optimum efficiency.

Next, a low-temperature insulating run will be described. Since milk is already cooled by the cooling run, the milk temperature during the low-temperature insulating run is substantially constantly low at about 4°C. The above refrigerant control run is performed. Moreover, at end of the cooling run, that is, at a standby time of the low-temperature insulating run, the expansion valve 4 and the interrupting valve 273 are fully closed, and the second expansion valve 204 and the second interrupting valve 272 are also fully closed. Therefore, the amount of the refrigerant in the evaporator 5 is already set to be appropriate. Therefore, the cooling run during the low-temperature insulating run is performed in a state in which the second expansion valve 204 and the second interrupting valve 272 remain to be closed. A basic run operation is similar to that in the cooling devices of Examples 1 to 5.

The cooling run in a case where the milk is additionally introduced during second and subsequent milking operations is similar to that during the above-described milk introduction. At the start of the cooling run, in a state in which the second expansion valve 204 is closed, the second interrupting valve 272 is opened for a predetermined time. Accordingly, the refrigerant stored in the second evaporator 205 is supplied into the refrigeration cycle circuit being run, and the appropriate amount of the refrigerant can be set in accordance with a high evaporation temperature.

Next, an operation during a cleaning run will be described. Since the hot water is introduced into the cooling container 20 during the cleaning run, an abnormally high pressure of the evaporator 5 and a damage or the like on a device due to the high pressure raise problems. To solve the problems, the expansion valve 4, the interrupting valve 273, the second expansion valve 204 and the second interrupting valve 272 are closed, and a capacity of the whole refrigeration cycle circuit 210 is utilized to suppress a pressure rise. Since another operation of the cleaning run is similar to that of Example 5, detailed description thereof is omitted.

Subsequently, there will be described a single hot water supply run in which the second evaporator 205 is utilized. In a case where the single hot water supply run is performed at a standby time of the low-temperature insulating run, since first the expansion valve 4, the interrupting valve 273, the second expansion valve 204 and the second interrupting valve 272 are fully closed, the second expansion valve 204 and the second interrupting valve 272 are opened. Accordingly, the refrigerant successively flows through the compressor 2, the discharge pipe 11, the radiator 3A, the high-pressure refrigerant pipe 12, the second high-pressure refrigerant pipe 212, the second expansion valve 204, the second evaporator 205, the second interrupting valve 272, the second suction tube 214 and the suction tube 14, and returns to the compressor 2 to thereby form a closed refrigerant circuit.

It is to be noted that the amount of the refrigerant to be introduced into the refrigeration cycle circuit 210 is determined beforehand so that the efficiency of the cooling run is maximized in a case where the milk temperature reaches a target cooling temperature, and the efficiency of the hot water supply run is maximized in a case where the run is switched from the state to the single hot water supply run. However, since the efficiency of the hot water supply run and the optimum refrigerant amount depend on an atmosphere temperature, the refrigerant amount is evaluated throughout the year, and the most appropriate refrigerant amount needs to be determined.

When the single hot water supply run is started, the refrigerant is compressed by the compressor 2 of the refrigeration cycle circuit 210, and discharged to the discharge pipe 11. This state will be described with reference to the pressure-enthalpy graph of FIG. 5. The compressor 2 has a state a before suction. After the refrigerant is compressed and discharged, a state b1 is achieved. Here, the state b1 is supercritical. Thereafter, the refrigerant reaches the radiator 3A of the water heat exchanger 3, where heat is released to the water in a water channel 3B to obtain a low temperature. In FIG. 5, the state b1 turns to a state c1, and the state c1 is usually a liquid phase at a pressure which is not less than a critical pressure. The water in the water channel 3B is heated by a heat release function of the refrigerant in this radiator 3A to produce the hot water at a high temperature.

Here, in the refrigeration cycle circuit 210, carbon dioxide is used as the refrigerant, and the refrigerant pressure in the radiator 3A is not less than the critical pressure (state b1 to c1 in FIG. 5). Therefore, condensation of the refrigerant does not occur in the radiator 3A, and the temperature of the refrigerant drops with the release of the heat to the water in the water channel 3B from the inlet toward the outlet of the radiator 3A. On the other hand, in the water channel 3B of the water heat exchanger 3, the water temperature rises with absorption of the heat from the refrigerant from the inlet toward the outlet.

The low-temperature high-pressure refrigerant which has exited from the radiator 3A of the water heat exchanger 3 successively passes through the high-pressure refrigerant pipe 12 and the second high-pressure refrigerant pipe 212, is throttled and expanded by the expansion valve 204 to obtain a low pressure, and reaches the second evaporator 205. In FIG. 5, this is represented by a change of the state c1 to a state d. The state d is a mixed two-phase state in which a liquid refrigerant is mixed with a vapor refrigerant. In the evaporator 205, the liquid-phase refrigerant evaporates to form the vapor refrigerant (change from the state d to the state a in FIG. 5). The heat is absorbed from the atmosphere by an evaporation function of this refrigerant. Thereafter, the refrigerant successively flows from the second evaporator 205 through the second interrupting valve 272, the second suction tube 214 and the suction tube 14, and is sucked by the compressor 2 again. According to a function (heat pump function) of the above continuous refrigeration cycle, the hot water is produced.

During the single hot water supply run, the open degree of the second expansion valve 204 is adjusted so that the temperature of the discharged refrigerant detected by the discharge temperature sensor T1 attached to the discharge pipe 11 of the refrigeration cycle circuit 210 indicates a predetermined value. Specifically, when the refrigerant temperature detected by the discharge temperature sensor T1 is higher than a predetermined value, the open degree of the second expansion valve 204 is increased. Conversely, when the refrigerant temperature detected by the discharge temperature sensor T1 is lower than the predetermined value, the open degree of the second expansion valve 204 is reduced. Accordingly, a highly efficient preferable single hot water supply run can be performed.

Next, there will be described an operation of a hot water supply circuit 130 during the single hot water supply run. During the single hot water supply run, a circulating water pump 32 of the hot water supply circuit 130 is operated, and low-temperature hot water or the water passes from a lower portion a hot water storage tank 31 through a low-temperature pipe 34, the circulating water pump 32 and a flow rate adjustment valve 33 into an inlet of the water channel 3B of the water heat exchanger 3. In the water heat exchanger 3, as described above, when the water flowing through the water channel 3B exchanges the heat with the refrigerant flowing through the radiator 3A, the water is heated to make high-temperature hot water. The high-temperature hot water which has exited from the water channel 3B of the water heat exchanger 3 passes through a high-temperature pipe 35 of the hot water supply circuit 130, and is poured into the hot water storage tank 31 from the upper portion of the hot water storage tank 31. Since the high-temperature hot water is poured into the upper portion of the hot water storage tank 31, and the water is taken out of the lower portion of the tank, a density difference due to the difference of the water temperature is utilized to store the high-temperature water in an upper portion of the tank and store the low-temperature water in a lower portion of the tank.

Moreover, the flow rate adjustment valve 33 adjusts the flow rate of the water so that the temperature of the hot water in the outlet of the water channel 3B of the water heat exchanger 3 indicates a predetermined value. Specifically, when the temperature of the hot water of the outlet of the water channel 3B is higher than the predetermined temperature, the open degree of the flow rate adjustment valve 33 is enlarged to increase the flow rate of the water. Conversely, when the temperature of the hot water in the outlet of the water channel 3B is low, the open degree of the flow rate adjustment valve 33 is reduced to decrease the flow rate of the water. The temperature of the hot water of the water channel 3B outlet is detected by an outlet hot water temperature sensor T2 attached to the high-temperature pipe 35, and the predetermined temperature is a temperature suitable for the cleaning application or another hot water supply application, and is specifically about 50 to 85°C.

Next, there will be described the single hot water supply run in a case where any milk as the cooling object is not present in the cooling container 20. A state in which any milk is not present in the cooling container 20 is usually a state in which a cargo of the milk is collected, and the cleaning of the cooling container 20 ends. Therefore, the expansion valve 4, the second interrupting valve 272, the second expansion valve 204 and the second interrupting valve 272 are fully opened. Therefore, the expansion valve 4 and the interrupting valve 273 are closed before starting the single hot water supply run. Accordingly, the refrigerant successively flows through the compressor 2, the discharge pipe 11, the radiator 3A, the high-pressure refrigerant pipe 12, the second high-pressure refrigerant pipe 212, the second expansion valve 204, the second evaporator 205, the second interrupting valve 272, the second suction tube 214 and the suction tube 14, and returns to the compressor 2 to thereby form a closed refrigerant circuit.

Moreover, in this state, the amount of the refrigerant in the second evaporator 205 is excessively large. Therefore, when the single hot water supply run is started, the expansion valve 4 is slightly opened, the refrigerant is poured into the evaporator 5, and the refrigerant amount is appropriately adjusted while the interrupting valve 273 remains to be closed. Here, a method of judging the appropriate refrigerant amount is based on a difference between a sucked refrigerant temperature detected by a suction temperature sensor (not shown) attached to the suction tube 14 and the evaporation temperature detected by a temperature sensor (not shown) attached to the evaporator 205, that is, a so-called degree of superheat. The expansion valve 4 is opened or close so that this degree of superheat indicates a predetermined value.

Specifically, the expansion valve 4 is slightly opened, and the refrigerant is poured into the evaporator 5. When the amount of the refrigerant in the evaporator 205 decreases, and the degree of superheat reaches the predetermined value, the expansion valve 4 is fully closed again. It is to be noted that as described above, the open degree of the expansion valve 204 is controlled so that the discharge temperature detected by the discharge temperature sensor T1 indicates the predetermined value. Since another flow of the refrigerant and another operation of a hot water storage circuit are similar to those of the above-described single hot water supply run, detailed description thereof is omitted.

The above-described single hot water supply run is performed in a case where the amount of the hot water generated by the milk cooling run comes short with respect to the required hot water supply load, and a length of time when the single hot water supply run is performed, that is, the amount of the hot water to be generated is determined in accordance with the required amount of the hot water. However, when the whole hot water storage tank 31 is filled with the high-temperature hot water, the high-temperature hot water flows into the water heat exchanger 3 during the cooling run. Therefore, cooling capability and efficiency remarkably deteriorate, and the cooling cannot be performed. Therefore, during the single hot water supply run, the whole hot water storage tank 31 is not filled with the hot water. It is necessary to surely secure a cold water portion corresponding to an amount for use in the cooling run in the lower portion of the hot water storage tank 31.

The amount of the hot water to be stored in the hot water storage tank 31 during the single hot water supply run depends on conditions on which the cooling device is used, that is, the amount of the milk (farming scale), the amount of the hot water for use and the like. However, there is considered such a control that, for example, when the amount of the hot water is 1/2 or less of the capacity of the hot water storage tank 31, the single hot water supply run is started. When the amount is 1/2 or more, the single hot water supply run is not performed. It is to be noted that the amount of the hot water stored in the hot water storage tank 31 can be grasped in accordance with the temperature detected by stored hot water temperature sensors T4.

As described above, according to the cooling device 200 of Example 6, in a case where the amount of the hot water comes short with the only hot water generated during the cooling of the milk, when the single hot water supply run is performed using the atmosphere as the heat source, the hot water can be obtained to compensate for the shortness. In consequence, an auxiliary boiler for additionally supplying the hot water is not necessary. Moreover, since highly efficient heat pump hot water supply is performed, energy consumption is further saved. Furthermore, the amount of the refrigerant can appropriately be controlled in accordance with the milk temperature during the cooling run, and the efficiency of the cooling run is also enhanced.

It is to be noted that a case where the interrupting valve 273 and the second interrupting valve 272 are used has been described above as an example, but instead of these valves, check valves may be used. In this case, the amount of the refrigerant cannot be controlled in the same manner as described above. However, when an accumulator having a sufficient capacity is disposed, the cooling run and the single hot water supply run can be performed without any problem. Therefore, in a case where the amount of the hot water comes short with the only amount of the hot water generated by the cooling run in the same manner as described above, the single hot water supply run can be performed to generate the hot water and compensate for the shortness, and the energy consumption can be saved.

### (Example 7)

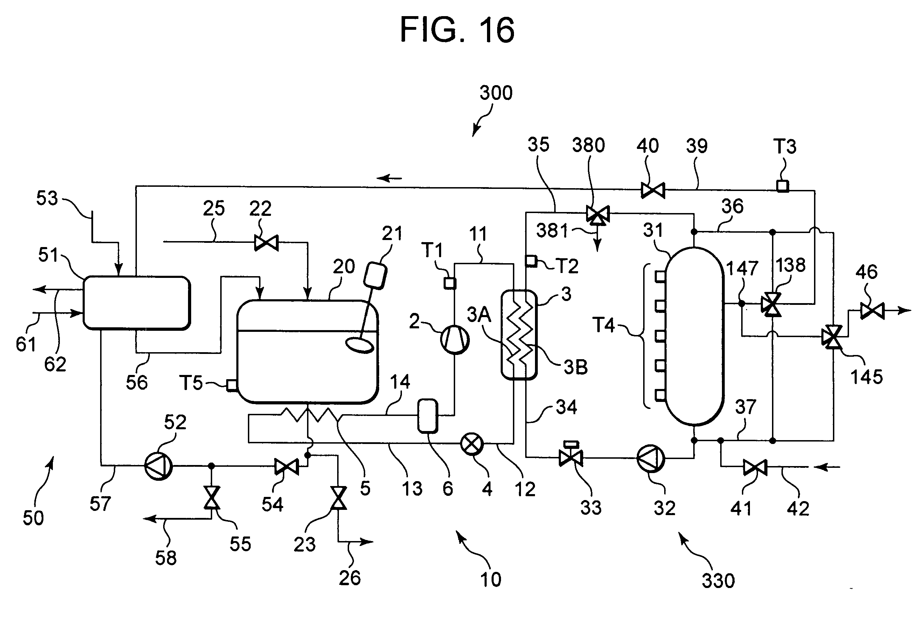

A seventh embodiment of the present invention will be described. FIG. 16 is a circuit diagram showing a cooling device 300 in Example 7 of the present invention. In FIG. 16, constituting elements which produce the same functions and effects as those of Example 5 shown in FIG. 13 or functions and effects similar to those of the example are denoted with the same reference numerals. The cooling device 300 of Example 7 is different from the cooling device 100 of Example 5 in that a hot water discharge port 381 is disposed in a high-temperature pipe 35 of a hot water supply circuit 330 via a discharge changeover valve 380.

The discharge changeover valve 380 selectively switches hot water, which has flown from a water channel 3B of a water heat exchanger 3, so as to feed the hot water to a hot water storage tank 31, or discharge the hot water out of a system of the hot water supply circuit 330 via the hot water discharge port 381. It is possible to forcibly discharge high-temperature hot water from the hot water storage tank 31 by the discharge changeover valve 380.

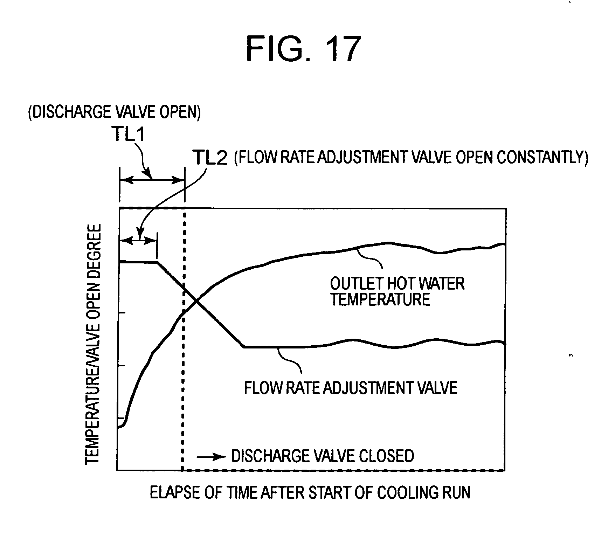

Next, with respect to an operation of the cooling device 300 of Example 7, a part different from that in Examples 1 to 5 will mainly be described. As shown in FIG. 17, for an only predetermined time (TL1) from start of a cooling run, the discharge changeover valve 380 is interrupted on the side of the hot water storage tank 31, and the valve is opened on the side of the hot water discharge port 381. Accordingly, for the predetermined time after the start of the cooling run, the hot water which has flown from the water channel 3B of the water heat exchanger 3 does not flow into the hot water storage tank 31, and is discharged out of the system of the hot water supply circuit 330 via the hot water discharge port 381. When the high-temperature hot water in the hot water storage tank 31 is to be discharged, the cooling run is stopped, the discharge changeover valve 380 is interrupted on the water channel 3B side of the water heat exchanger 3, and the valve is opened on the hot water discharge port 381 side. In this case, the high-temperature hot water in the hot water storage tank 31 can be discharged from the system of the hot water supply circuit 330.

Moreover, for a predetermined time (TL2) from the start of the cooling run, a flow rate adjustment valve 33 is fixed to such a predetermined open degree that a sufficient flow rate can be secured, the open degree is gradually reduced after elapse of the predetermined time TL2, and the flow rate is reduced. Finally, the open degree is adjusted so that an outlet hot water temperature sensor T2 attached to the high-temperature pipe 35 indicates a predetermined value.

After elapse of the predetermined time TL1, the discharge changeover valve 380 is interrupted on the side of the hot water discharge port 381, and is opened on the hot water storage tank 31 side. As a result, the hot water which has flown from the water channel 3B of the water heat exchanger 3 flows through the hot water storage tank 31.

The above-described predetermined times TL1 and TL2 may be set beforehand to certain times. Alternatively, the valve may be operated on the basis of the temperature of the hot water in the outlet of the water heat exchanger 3 detected by the outlet hot water temperature sensor T2. From the start of the cooling run, the flow rate adjustment valve 33 is fixed to the predetermined open degree. When the outlet hot water temperature rises to a predetermined value or more, the open degree of the flow rate adjustment valve 33 is gradually reduced, and the outlet hot water temperature further rises. When a predetermined second temperature is reached, the discharge changeover valve 380 may be interrupted on the hot water discharge port 381 side, and may be opened on the hot water storage tank 31 side.

It is to be noted that except the above start of the cooling run, usually, the discharge changeover valve 380 is interrupted on the hot water discharge port 381 side, and opened on the hot water storage tank 31 side. Therefore, since an operation in this state is similar to that in Examples 1 to 5, detailed description of another cooling run, a low-temperature insulating run, a cleaning run or the like is omitted. The present example is applicable even to the cooling device in which the second evaporator 205 is disposed to make the single hot water supply run possible as in Example 6.

Moreover, according to the present example, low-temperature hot water which does not reach the predetermined temperature immediately after the start of the cooling run is not introduced into the hot water storage tank 31, and is discharged out of the system of the hot water supply circuit 330. Therefore, it is possible to avoid a problem that formed temperature layers of the hot water already stored in the hot water storage tank 31 are disturbed to lower the temperature of the stored hot water. As a result, heat losses of the stored hot water are reduced, and it is possible to utilize the hot water effectively.

Furthermore, at the start of the cooling run, the temperature of the outlet hot water is not controlled by the flow rate adjustment valve 33, and a sufficient flow rate is secured with a certain open degree. Therefore, it is possible to avoid an abnormal rise in a discharge temperature or an abnormally high pressure immediately after the compressor 2 is started.

### (Example 8)

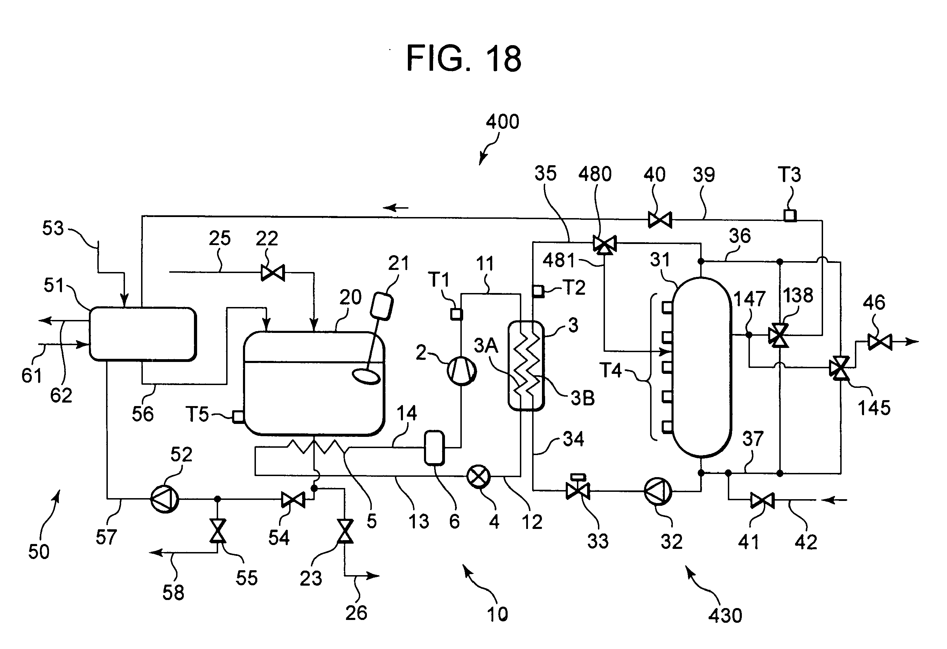

An eighth embodiment of the present invention will be described. FIG. 18 is a circuit diagram showing a cooling device 400 in Example 8 of the present invention. In FIG. 18, constituting elements which produce the same functions and effects as those of Example 5 shown in FIG. 13 or functions and effects similar to those of the example are denoted with the same reference numerals. The cooling device 400 of Example 8 is different from the cooling device 100 of Example 5 in that a changeover valve 480 and a medium-temperature return pipe 481 are disposed.

The changeover valve 480 includes a high-temperature pipe 35 of a hot water supply circuit 430, one way of the valve is connected to an outlet of a water channel 3B of a water heat exchanger 3 via the high-temperature pipe 35, another way thereof is connected to a high-temperature return port of an upper portion of a hot water storage tank 31 via the high-temperature pipe 35, and still another way thereof is connected to the medium-temperature return pipe 481. The other end of the medium-temperature return pipe 481 is connected to a portion which is below the high-temperature return port connected to the high-temperature pipe 35 of the hot water storage tank 31 and which is above a low-temperature takeout port of the tank connected to a low-temperature pipe 34. The changeover valve 480 selectively switches the hot water which has flown from the water channel 3B of the water heat exchanger 3, so as to feed the hot water to the upper-portion high-temperature return port of the hot water storage tank 31 via the high-temperature pipe 35 or feed the hot water to a medium-temperature portion of the hot water storage tank 31 via the medium-temperature return pipe 481.

Next, with respect to an operation of the cooling device 400 of Example 8, a part different from that in Examples 1 to 5 described above will mainly be described. As shown in FIG. 17 (a discharge valve in FIG. 17 means a valve on the side of the medium-temperature return pipe), for an only predetermined time (TL1) from start of a cooling run, the changeover valve 480 is interrupted on the side of the hot water storage tank 31 via the high-temperature pipe 35, and the valve is opened on the side of the medium-temperature return pipe 481. Accordingly, for the predetermined time after the start of the cooling run, the hot water which has flown from the water channel 3B of the water heat exchanger 3 does not flow into the upper-portion high-temperature return port of the hot water storage tank 31, and flows from the medium-temperature portion of the hot water storage tank 31 via the medium-temperature return pipe 481 into the hot water storage tank 31.

In addition, for a predetermined time (TL2) from the start of the cooling run, a flow rate adjustment valve 33 is fixed to such a predetermined open degree that a sufficient flow rate can be secured, the open degree is gradually reduced after elapse of the predetermined time TL2, and the flow rate is reduced. Finally, the open degree is adjusted so that an outlet hot water temperature sensor T2 attached to the high-temperature pipe 35 indicates a predetermined value.

After elapse of the predetermined time TL1, the changeover valve 480 is interrupted on the side of the medium-temperature return pipe 481, and is opened on the hot water storage tank 31 side via the high-temperature pipe 35. As a result, the hot water which has flown from the water channel 3B of the water heat exchanger 3 flows from the upper-portion high-temperature return port of the hot water storage tank 31 into the hot water storage tank 31.

The above-described predetermined times TL1 and TL2 may be set beforehand to certain times. Alternatively, the valve may be operated on the basis of the temperature of the hot water in the outlet of the water heat exchanger 3 detected by the outlet hot water temperature sensor T2. From the start of the cooling run, the flow rate adjustment valve 33 is fixed to the predetermined open degree. When the outlet hot water temperature rises to a predetermined value or more, the open degree of the flow rate adjustment valve 33 is gradually reduced, and the outlet hot water temperature further rises. When a predetermined second temperature is reached, the changeover valve may be interrupted on the medium-temperature return pipe 481 side, and may be opened on the hot water storage tank 31 side via the high-temperature pipe 35.

Moreover, according to the constitution of the present example, in a case where a run is performed in which the outlet hot water temperature is changed to generate low-temperature hot water as in the medium-temperature outlet hot water cooling run described above, the changeover valve 480 is interrupted on the hot water storage tank 31 side via the high-temperature pipe 35, and opened on the medium-temperature return pipe 481 side. Therefore, even when high-temperature hot water is already present in an upper portion of the hot water storage tank 31, it is possible to pour, into the hot water storage tank 31, the hot water at a temperature lower than that of the high-temperature hot water without disturbing any formed temperature layer in the hot water storage tank 31.

It is to be noted that except the above start of the cooling run and the medium-temperature outlet hot water cooling run, usually, the changeover valve 480 is interrupted on the medium-temperature return pipe 481 side, and opened on the hot water storage tank 31 side via the high-temperature pipe 35. Therefore, since an operation in this state is similar to that in Examples 1 to 5, detailed description of another cooling run, a low-temperature insulating run, a cleaning run or the like is omitted. The present example is applicable even to a cooling device in which a second evaporator 205 is disposed to make the single hot water supply run possible as in Example 6.

According to the present example described above, the low-temperature hot water which does not reach the predetermined temperature immediately after the start of the cooling run is not introduced into a high-temperature portion of the upper portion of the hot water storage tank 31, and can be poured into a medium-temperature portion of the hot water storage tank 31 via the medium-temperature return pipe 481. Therefore, it is possible to avoid a problem that formed temperature layers of the hot water already stored in the hot water storage tank 31 are disturbed to lower the temperature of the stored hot water. As a result, heat losses of the stored hot water are reduced, and it is possible to utilize the hot water effectively.

Furthermore, at the start of the cooling run, the temperature of the outlet hot water is not controlled by the flow rate adjustment valve 33, and a sufficient flow rate is secured with a certain open degree. Therefore, it is possible to avoid an abnormal rise in a discharge temperature or an abnormally high pressure immediately after the compressor 2 is started.

### (Example 9)

A ninth embodiment of the present invention will be described. Since a basic constitution of Example 9 is common to the cooling device 400 of Example 8 in many respects, a drawing is omitted, and an only different respect will be described. A cooling device of Example 9 is different from the cooling device 400 of Example 8 in that a medium-temperature return pipe 481 is not connected to a hot water storage tank 31, and is connected to a circulating water pump 32 of a low-temperature pipe 34 on an upstream side.

According to the constitution of the present example, in a case where a changeover valve 480 is interrupted on a hot water storage tank 31 side via a high-temperature pipe 35, and opened on a medium-temperature return pipe 481 side, water successively flows from the low-temperature pipe 34 through the circulating water pump 32, a flow rate adjustment valve 33, a water channel 3B of a water heat exchanger 3, a high-temperature pipe 35, the changeover valve 480 and the medium-temperature return pipe 481. The water circulates through a closed circuit, thereby returning to the low-temperature pipe 34. Therefore, for a predetermined time after start of a run, low-temperature hot water which does not reach a predetermined temperature is not returned to the hot water storage tank 31, and is returned to the upstream side of the circulating water pump 32 of the low-temperature pipe 34. Accordingly, in the same manner as in Examples 7 and 8, it is possible to avoid a problem that formed temperature layers of the hot water already stored in the hot water storage tank 31 are disturbed to lower the temperature of the stored hot water.

It is to be noted that the cooling device of the present example is different from the cooling device 400 of Example 8 in that the hot water cannot be poured from a medium-temperature portion of the hot water storage tank 31 during a cooling run when an outlet hot water temperature is changed. Since another operation, effect and the like are similar to those of Example 8, however, detailed description thereof is omitted.

### (Example 10)

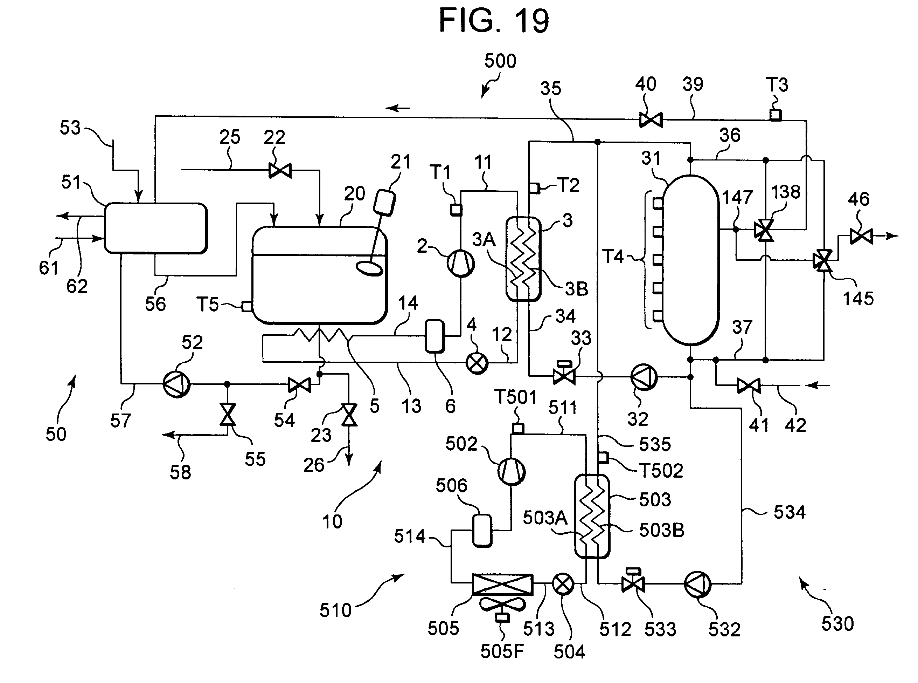

A tenth embodiment of the present invention will be described. FIG. 19 is a circuit diagram showing a cooling device 500 in Example 10 of the present invention. In FIG. 19, constituting elements which produce the same functions and effects as those of Example 5 shown in FIG. 13 or functions and effects similar to those of the example are denoted with the same reference numerals.

The cooling device 500 of Example 10 is different from the cooling device 100 of Example 5 in that a second refrigeration cycle circuit 510 is disposed by successively connecting a compressor 502, a discharge pipe 511, a radiator 503A, a high-pressure refrigerant pipe 512, an expansion valve 504 as throttle means, a low-pressure refrigerant pipe 513, an evaporator 505 and a suction tube 514 to constitute a closed circuit.

Here, the radiator 503A is included in a water heat exchanger 503, the water heat exchanger 503 includes the refrigerant channel 503A (radiator 503A) on a refrigeration cycle circuit 510 side and a water channel 503B on a hot water supply circuit 530 side, and the refrigerant channel 503A is heat-exchangeably connected to the water channel 503B so that a refrigerant counters a water stream.

Moreover, the evaporator 505 is, for example, a heat exchanger of a tube fin type or the like, and includes a fan 505F which feeds air to the heat exchanger in order to absorb heat from the atmosphere. It is to be noted that a heat absorption source of the evaporator 505 is not limited to the atmosphere, and another heat source may be used such as water, drainage, sun heat, or underground water.

Here, to the discharge pipe 11, a discharge temperature sensor T501 is attached which detects a temperature of the refrigerant compressed and discharged by the compressor 502. The suction tube 514 which connects the evaporator 505 to a suction portion of the compressor 502 is provided with an accumulator 506 for protecting the compressor 502 from breakage or the like due to suction of a liquid refrigerant. It is to be noted that carbon dioxide is also introduced as the refrigerant in the second refrigeration cycle circuit 510. That is, since a refrigerant pressure in the radiator 503A or the like on a refrigeration cycle high-pressure side exceeds a critical pressure, a refrigeration cycle is a transitional critical cycle.

Moreover, a low-temperature pipe 534 of a second circuit is branched from a low-temperature pipe 34 or directly connected to a lower portion of a hot water storage tank 31. The other end of the low-temperature pipe 534 of the second circuit is connected to an inlet of the water channel 503B of the water heat exchanger 503. Moreover, an outlet of a water channel 3B is connected to a high-temperature pipe 535 of the second circuit. The high-temperature pipe 535 of the second circuit is connected to a high-temperature pipe 35 or an upper portion of the hot water storage tank 31. Moreover, the low-temperature pipe 534 is provided with a circulating water pump 532 and a flow rate adjustment valve 533. It is to be noted that as described above, a water flow direction in the water channel 503B of the water heat exchanger 503 is opposed to a refrigerant flow in the radiator 503A. To the high-temperature pipe 535, there is attached an outlet hot water temperature sensor T502 for measuring a temperature of the hot water which exchanges heat in the water heat exchanger 503 to reach a high temperature.

It is to be noted that since a refrigeration cycle circuit 10, a cooling container 20, an automatic cleaning circuit 50 and another constitution of a hot water supply circuit 530 are similar to those of the cooling device 100 of Example 5, detailed description thereof is omitted.

Next, an operation of the cooling device 500 in Example 10 will be described with reference to FIG. 19, and if necessary, FIG. 5. Since added constituting elements of the present example, that is, constituting elements other than the second refrigeration cycle circuit 510 perform an operation similar to that of the cooling device 100 of Example 5, detailed description is omitted. Here, there will mainly be described the operation of the second refrigeration cycle circuit 510 as the added constituting element.

The second refrigeration cycle circuit 510 of Example 10 can perform a hot water supply run (heat pump run) to generate hot water as needed, regardless of run states of the refrigeration cycle circuit 10, the automatic cleaning circuit 50 and a warm water supply circuit of the hot water supply circuit 530. Specifically, even during a cooling run, a low-temperature insulating run or an automatic cleaning run, in an empty state of the cooling container 20, or while the hot water is being supplied to another equipment, the hot water supply run can be performed.

To perform the hot water supply run in the second refrigeration cycle circuit 510, first the compressor 502, the circulating water pump 532 and the heat exchanger fan 505F are driven. The refrigerant is compressed at a high temperature and under a high pressure by the compressor 502 of the second refrigeration cycle circuit 510, and discharged to the discharge pipe 511. This state will be described with reference to a pressure-enthalpy graph of FIG. 5. The compressor 502 has a state a before suction. After the refrigerant is compressed and discharged, a state b1 is achieved. Here, the state b1 is supercritical. Thereafter, the refrigerant reaches the radiator 503A of the water heat exchanger 503, where heat is released to the water in the water channel 503B to obtain a low temperature. In FIG. 5, the state b1 turns to a state c1, and the state c1 is usually a liquid phase at a pressure which is not less than a critical pressure. The water in the water channel 503B is heated by a heat release function of the refrigerant in this radiator 503A to produce the hot water at the high temperature.

Here, carbon dioxide is used as the refrigerant of the second refrigeration cycle circuit 510, and the refrigerant pressure in the radiator 503A is not less than the critical pressure (state b1 to c1 in FIG. 5). Therefore, condensation of the refrigerant does not occur in the radiator 503A, and the temperature of the refrigerant drops with the release of the heat to the water in the water channel 503B from the inlet toward the outlet of the radiator 5033A. On the other hand, in the water channel 503B of the water heat exchanger 503, the water temperature rises with absorption of the heat from the refrigerant from the inlet toward the outlet.

The low-temperature high-pressure refrigerant which has exited from the radiator 503A of the water heat exchanger 503 passes through the high-pressure refrigerant pipe 512, is throttled and expanded by the expansion valve 504 at a low pressure, and reaches the evaporator 505. In FIG. 5, this is represented by a change of the state c1 to a state d. The state d is a mixed two-phase state in which a liquid refrigerant is mixed with a vapor refrigerant. In the evaporator 505, the liquid-phase refrigerant evaporates to form the vapor refrigerant (change from the state d to the state a in FIG. 5). According to the evaporation function of this refrigerant, the heat is absorbed from the atmosphere. Thereafter, the refrigerant is sucked from the evaporator 505 through the suction tube 514 into the compressor 502 again. The hot water is produced by the function (heat pump function) of the above continuous refrigeration cycle.

During the hot water supply run, an open degree of the expansion valve 504 is adjusted so that the temperature of the discharged refrigerant detected by the discharge temperature sensor T501 attached to the refrigerant discharge pipe 511 of the refrigeration cycle circuit 510 indicates a predetermined value. Specifically, when the refrigerant temperature detected by the discharge temperature sensor T501 is higher than the predetermined value, the open degree of the expansion valve 504 is enlarged. Conversely, when the refrigerant temperature detected by the discharge temperature sensor T501 is lower than the predetermined value, the open degree of the expansion valve 504 is reduced. In consequence, it is possible to perform a highly efficient and preferable hot water supply run.

Next, there will be described an operation of the hot water supply circuit 530 during the hot water supply run. During the hot water supply run, the circulating water pump 532 of the hot water supply circuit 530 is operated, the low-temperature hot water or the water passes through the low-temperature pipe 534, and flows through the circulating water pump 532 and the flow rate adjustment valve 533 into the inlet of the water channel 503B of the water heat exchanger 503. In the water heat exchanger 503, as described above, the water flowing through the water channel 503B exchanges the heat with the refrigerant flowing through the radiator 503A, and is heated to produce high-temperature hot water. Moreover, the high-temperature hot water which has exited from the water channel 503B of the water heat exchanger 503 passes through the high-temperature pipe 535 of the hot water supply circuit 530, and is poured from the upper portion of the hot water storage tank 31 into the hot water storage tank 31. Since the high-temperature hot water is injected from the upper portion of the hot water storage tank 31, and water is taken out of the lower portion of the tank, a density difference due to the difference of the water temperature is utilized to store the high-temperature water in the upper portion of the hot water storage tank 31 and store the low-temperature water in the lower portion of the tank.

Moreover, the open degree of the flow rate adjustment valve 533 is adjusted to adjust the flow rate of the water so that the temperature of the hot water in the outlet of the water channel 503B of the water heat exchanger 503 indicates a predetermined value. Specifically, when the temperature of the hot water of the outlet of the water channel 503B is higher than the predetermined temperature, the open degree of the flow rate adjustment valve 533 is enlarged to increase the flow rate of the water. Conversely, when the temperature of the hot water in the outlet of the water channel 503B is low, the open degree of the flow rate adjustment valve 533 is reduced to decrease the flow rate of the water. The temperature of the hot water of the water channel 503B outlet is detected by the outlet hot water temperature sensor T502 attached to the high-temperature pipe 535, and the predetermined temperature is a temperature suitable for the cleaning application or another hot water supply application, and is specifically about 50 to 85°C.

The above-described hot water supply run is performed in a case where the amount of the hot water generated by a milk cooling run comes short with respect to a required hot water supply load. In accordance with the required amount of the hot water, a length of time when the hot water supply run is performed, that is, the amount of the hot water to be generated is determined. However, when the whole hot water storage tank 31 is filled with the high-temperature hot water, the high-temperature hot water flows from the lower portion of the hot water storage tank 31 into the water heat exchanger 3 during the cooling run. Therefore, cooling capability and efficiency remarkably deteriorate, and it becomes difficult to cool milk. Therefore, during the hot water supply run, the whole hot water storage tank 31 is not filled with the high-temperature hot water. It is necessary to surely secure a cold water portion corresponding to an amount for use in the cooling run in the lower portion of the hot water storage tank 31.

The amount of the hot water to be stored in the hot water storage tank 31 during the single hot water supply run depends on conditions on which the cooling device is used, that is, the amount of the milk (farming scale), the amount of the hot water for use and the like. However, there is considered such a control that, for example, when the amount of the hot water is 1/2 or less of the capacity of the hot water storage tank 31, the single hot water supply run is started. When the amount is 1/2 or more, the single hot water supply run is not performed. It is to be noted that the amount of the hot water stored in the hot water storage tank 31 can be grasped in accordance with the temperature detected by stored hot water temperature sensors T4.

As described above, according to the cooling device 500 of Example 10, in a case where the only hot water generated during the cooling of the milk cannot cover the required hot water supply load, the hot water supply run can be performed using the atmosphere as a heat source to generate the hot water which compensates for the shortness. Therefore, an auxiliary boiler for additionally supplying the hot water is not necessary. Moreover, since highly efficient heat pump hot water supply is performed, energy consumption is further saved. Furthermore, in the cooling device 500 of Example 10, the hot water supply run can be performed at any time regardless of a run state of the device, that is, without depending on whether the cooling run, the low-temperature insulating run or the cleaning run is being performed. Therefore, the present example is advantageous in supplying the hot water stably without generating any hot water shortness.

The present invention can be utilized not only in the device which cools the milk immediately after drawn to store the cold milk as in the above-described examples but also in another industrial field in which cooling, low-temperature insulating, cleaning and sterilizing are required, such as a cooling device associated with processing of food or the like or an automatic dispensing machine.

## Claims

1. A cooling device comprising:
a refrigeration cycle circuit including a compressor, a radiator, throttle means and an evaporator;
a cooling container in which a cooling object is stored; and
a hot water storage tank which stores hot water,
wherein the cooling object in the cooling container is cooled by absorption of heat in the evaporator, water is boiled by release of the heat in the radiator to store the hot water in the hot water storage tank, and the hot water in the hot water storage tank is supplied into the cooling container.

2. A cooling device comprising:
a refrigeration cycle circuit including a compressor, a radiator, throttle means and an evaporator;
a cooling container in which a cooling object is stored;
a hot water storage tank which stores hot water; and
a cleaning unit which supplies a cleaning liquid to the cooling container,
wherein the cooling object in the cooling container is cooled by absorption of heat in the evaporator, water is boiled by release of the heat in the radiator to store the hot water in the hot water storage tank, and the hot water in the hot water storage tank is supplied to the cleaning unit.

3. The cooling device according to claim 2, wherein the hot water storage tank includes: a high-temperature takeout port out of which the hot water is taken from an upper portion of the hot water storage tank; and a medium-temperature takeout port which is disposed below this high-temperature takeout port and out of which the hot water is taken,
mixing of the hot water taken out of the high-temperature takeout port and the hot water taken out of the medium-temperature takeout port and mixing of the hot water taken out of the medium-temperature takeout port and water are selectively performed, and this mixed hot water is supplied to the cleaning unit.

4. The cooling device according to claim 2 or 3,
wherein in a cooling run to cool the cooling object, a temperature of the hot water to be generated is changed with the progress of the cooling run.

5. The cooling device according to claim 4, wherein in a case where the cooling object is introduced into the cooling container, and the cooling run is performed until this cooling object reaches a predetermined temperature, a medium-temperature outlet hot water cooling run is performed to generate the hot water at a first set temperature for a predetermined time after start of the cooling run, and a high-temperature outlet hot water cooling run is performed to generate the hot water at a second set temperature which is higher than the first set temperature until the cooling run ends after an elapse of the predetermined time.

6. The cooling device according to claim 4, wherein in a case where the cooling object is introduced into the cooling container a plurality of times, and the cooling run is performed a plurality of times, during the whole cooling run from start of the first cooling run until end of the last cooling run, a medium-temperature outlet hot water cooling run is performed to generate the hot water at a first set temperature for a predetermined time after the start of the first cooling run, and a high-temperature outlet hot water cooling run is performed to generate the hot water at a second set temperature which is higher than the first set temperature until the last cooling run ends after the elapse of the predetermined time.

7. The cooling device according to claim 5 or 6,
wherein the cooling container includes temperature detecting means for detecting the temperature of the cooling object, a required time of the high-temperature outlet hot water cooling run is calculated based on a change of the temperature detected by the temperature detecting means with time, and the medium-temperature outlet hot water cooling run is switched to the high-temperature outlet hot water cooling run.

8. The cooling device according to any one of claims 1 to 3, wherein the refrigeration cycle circuit includes a second evaporator which absorbs the heat from a separate heat source which is different from the cooling object.

9. The cooling device according to any one of claims 1 to 3, further comprising:
means for separating a surplus refrigerant of the refrigeration cycle from this refrigeration cycle with a drop in the temperature of the cooling object to temporarily accumulate the refrigerant during a cooling run of the cooling device.

10. The cooling device according to any one of claims 1 to 3, further comprising:
a second refrigeration cycle circuit in addition to the refrigeration cycle circuit,
the second refrigeration cycle circuit being constituted so that an evaporator of the second refrigeration cycle circuit absorbs heat from a heat source separate from the cooling object, water is heated to generate hot water by release of the heat from a radiator of the second refrigeration cycle circuit, and this hot water is supplied to the hot water storage tank.

11. The cooling device according to any one of claims 1 to 10, further comprising:
a high-temperature return pipe which returns the hot water heated by the radiator to the hot water storage tank; and
a discharge port disposed in the high-temperature return pipe via a discharge valve,
wherein the discharge valve is opened for a predetermined time after the start of the cooling run to discharge the hot water out of a system.

12. The cooling device according to any one of claims 1 to 10, further comprising:
a high-temperature return pipe which returns the hot water heated by the radiator to the hot water storage tank; and
a medium-temperature return pipe branched from this high-temperature return pipe and connected to a portion of the hot water storage tank below a connected portion of the high-temperature return pipe via a changeover valve,
wherein the changeover valve may be operated for a predetermined time after the start of the cooling run to return the hot water to the hot water storage tank via the medium-temperature return pipe.

13. The cooling device according to any one of claims 1 to 10, further comprising:
a high-temperature return pipe which returns the hot water heated by the radiator to the hot water storage tank;
a low-temperature pipe which allows low-temperature water to flow from the hot water storage tank through the radiator; and
a return pipe branched from the high-temperature return pipe and connected to the low-temperature pipe via a changeover valve,
wherein the changeover valve is operated for a predetermined time after the start of the cooling run to return the hot water to the low-temperature pipe.

14. The cooling device according to any one of claims 1 to 13, wherein the cooling container includes temperature detecting means for detecting the temperature of the cooling object, and the rotational speed of the compressor is controlled based on a change of the temperature detected by the temperature detecting means with time.

15. The cooling device according to any one of claims 1 to 14, wherein the cooling object is milk.

16. The cooling device according to any one of claims 2 to 15, wherein the cooling run is performed even during a cleaning run to introduce water, a cleaning liquid or a sterilizing liquid into the cooling container instead of the cooling object to generate hot water.

17. The cooling device according to any one of claims 1 to 16, wherein carbon dioxide is used as a refrigerant of the refrigeration cycle circuit and the second refrigeration cycle circuit.

18. The cooling device according to any one of claims 1 to 17, wherein a pressure of the refrigerant in the radiators of the refrigeration cycle circuit and the second refrigeration cycle circuit is not less than a critical pressure of the refrigerant during the run of these circuits.
